(19) Europäisches Patentamt
European Patent Office
Office européen des brevets

(11) **EP 4 282 910 A1**

(12) **EUROPEAN PATENT APPLICATION**

(43) Date of publication:
**29.11.2023 Bulletin 2023/48**

(21) Application number: **23174189.3**

(22) Date of filing: **18.05.2023**

(51) International Patent Classification (IPC):
*C08K 3/22* (2006.01)      *C08K 3/26* (2006.01)
*C08K 3/30* (2006.01)      *C08K 3/36* (2006.01)
*C08L 67/02* (2006.01)     *C08L 67/04* (2006.01)
*C08J 5/18* (2006.01)      *C08G 63/183* (2006.01)
*C08G 63/08* (2006.01)     *C08G 63/88* (2006.01)
*C08G 63/78* (2006.01)

(52) Cooperative Patent Classification (CPC):
(C-Sets available)
**C08K 3/22; C08J 5/18; C08K 3/26; C08K 3/30;
C08K 3/36;** C08G 63/08; C08G 63/183;
C08G 63/78; C08G 63/88; C08J 2367/02;
C08J 2367/04; C08K 2003/2227; C08K 2003/2241;
C08K 2003/265; C08K 2003/3045          (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.05.2022 KR 20220063075**

(71) Applicant: **Ecovance Co. Ltd**
**Suwon-si, Gyeonggi-do 16338 (KR)**

(72) Inventors:
• KIM, Seong Dong
16338 Gyeonggi-do (KR)
• KIM, Hoon
16338 Gyeonggi-do (KR)
• KIM, Hyung Mo
16338 Gyeonggi-do (KR)
• KIM, Kyung Youn
16338 Gyeonggi-do (KR)

(74) Representative: **Dehns**
**St. Bride's House**
**10 Salisbury Square**
**London EC4Y 8JD (GB)**

(54) **BIODEGRADABLE AND POLYMERIZABLE POLYESTER COMPOSITION, BIODEGRADABLE POLYESTER RESIN OBTAINED THEREFROM, AND PREPARATION METHOD THEREOF**

(57)  Embodiments relate to a biodegradable and polymerizable polyester composition, to a biodegradable polyester resin prepared therefrom, and to a process for preparing the same. As the biodegradable and polymerizable polyester composition comprises an inorganic filler in a certain content and satisfies a certain range of viscosity, it has excellent dispersibility during polycondensation; thus, it is possible to control the content of metals in a biodegradable polyester resin prepared from the biodegradable polyester polymerization composition and the dispersion index within optimal ranges. In addition, as the biodegradable and polymerizable polyester composition comprising an inorganic filler is subjected to a polycondensation reaction, the dispersibility during the polycondensation reaction is very excellent, which can suppress the aggregation of inorganic filler particles and prevent filter clogging, resulting in a decrease in defects such as voids in the processing process. Thus, it is possible to provide a biodegradable film and molded article of excellent quality.

EP 4 282 910 A1

(52) Cooperative Patent Classification (CPC): (Cont.)

C-Sets
**C08K 3/22, C08L 67/02;**
**C08K 3/22, C08L 67/04;**
**C08K 3/26, C08L 67/02;**
**C08K 3/26, C08L 67/04;**
**C08K 3/30, C08L 67/02;**
**C08K 3/30, C08L 67/04;**
**C08K 3/36, C08L 67/02;**
**C08K 3/36, C08L 67/04**

C-Sets
**C08K 3/22, C08L 67/02;**

**Description**

**Technical Field**

Embodiments relate to a biodegradable and polymerizable polyester composition, to a biodegradable polyester resin prepared therefrom, and to a process for preparing the same.

**Background Art**

In recent years, as concerns about environmental issues have increased, there is a need for a solution to the problem of dealing with various household products, in particular, disposable products. Specifically, polymer materials conventionally used have disadvantages in that harmful substances are discharged if they are incinerated and that it takes hundreds of years to be completely decomposed naturally depending on the type thereof.

In order to overcome the limitations of these polymers, studies on biodegradable polymers that can be decomposed in a much faster time are being actively conducted. Polybutyleneadipate terephthalate (PBAT), polybutylene succinate (PBS), polybutyleneadipate (PBA), and polycaprolactone (PCL) are used as biodegradable polymers.

However, these biodegradable polymers have a high viscosity of at least twice that of polyethylene terephthalate (PET). Thus, when an additive such as an inorganic filler is compounded (blended) with any of the biodegradable polymer resins, there is a problem in that hydrolysis or thermal decomposition may take place during the compounding process, resulting in a steep decrease in molecular weight and deterioration in mechanical properties.

In addition, when a film or molded article is prepared using the biodegradable polymer, an additive such as an inorganic filler is easily aggregated, whereby defects such as voids may be formed during blow molding or extrusion stretching. These defects may cause scratches on films or molded articles, or aggregated particles may make the surface roughness non-uniform. As a result, transparency may be deteriorated due to excessive scattering of light. In addition, there is a problem in that the inorganic filler may be precipitated onto the surface of the biodegradable polymer resin or film, or internal defects may be caused in the film or molded article.

Meanwhile, Japanese Laid-open Patent Publication No. 2003-160202 discloses a method for preparing a film by blending an additive such as an inorganic filler or a plasticizer with polylactic acid and aliphatic-aromatic copolymerized polyester. However, since the transparency of a final film is significantly low, or since the oxygen permeability is high, it can be hardly used for packaging applications that require high transparency and low oxygen permeability.

[Prior Art Document]

[Patent Document]

(Patent Document 1) Japanese Laid-open Patent Publication No. 2003-160202

**Disclosure of Invention**

**Technical Problem**

The embodiments are devised to solve the problems of the prior art discussed above.

An embodiment aims to provide a biodegradable and polymerizable polyester composition capable of enhancing dispersibility in a polymerization (polycondensation) process.

Another embodiment aims to provide a biodegradable polyester resin that can be used in various ways for packaging since it can enhance tensile strength and transparency and provide excellent oxygen barrier properties by lowering oxygen permeability.

Another embodiment aims to provide a process for preparing the biodegradable polyester resin in which filter clogging during melt extrusion is prevented, and the formation of voids during processing is minimized, whereby processability, productivity, and moldability are enhanced, and the above characteristics can be achieved in an economical and efficient way.

Another embodiment aims to provide a biodegradable polyester film and an environmentally friendly packaging material, which is prepared using the biodegradable and polymerizable polyester composition or the biodegradable polyester resin having the excellent characteristics described above, and which is biodegradable, environmentally friendly, and excellent in mechanical strength, transparency, and oxygen barrier properties.

**Solution to Problem**

An embodiment provides a biodegradable and polymerizable polyester composition, which comprises an aliphatic polymerizable polyester composition or an aliphatic-aromatic polymerizable polyester composition; and an inorganic filler, wherein the aliphatic polymerizable polyester composition is at least one selected from the group consisting of a lactide monomer and ring-opening prepolymers thereof, the aliphatic-aromatic polymerizable polyester composition is at least one selected from the group consisting of a monomer composition comprising a diol component and a dicarboxylic acid component and a prepolymer of part or all of the monomer composition, the inorganic filler is employed in an amount of 0.1% by weight to 10% by weight based on the total weight of the biodegradable and polymerizable polyester composition, and the biodegradable and polymerizable polyester composition has a viscosity of 5,000 to 15,000 poise at 240°C.

Another embodiment provides a biodegradable polyester resin, which is prepared from the biodegradable and polymerizable polyester composition, wherein the content of metals in the biodegradable polyester resin is 0.01% by weight to 7% by weight based on the total weight, and the dispersion index (DI) according to the following Equation 1 is 3.0 or more.

[Equation 1]

$$Dispersion\ index\ (DI) = \frac{TS}{OP} \times 100$$

In Equation 1, TS and OP are values, exclusive of units, measured for a specimen of a biodegradable polyester sheet prepared from the biodegradable polyester resin.

TS is the tensile strength (MPa) measured at a tensile speed of 100 mm/minute using a universal testing machine for a specimen prepared according to an ASTM D638 V type, and OP is the oxygen permeability ($cc/m^2 \cdot day \cdot atm$) measured at a temperature of 25°C and a relative humidity (RH) of 0% using OX-TRAN 702 for a specimen made to have a thickness of 500 $\mu$m in accordance with ASTM D3985.

Another embodiment provides a process for preparing a biodegradable polyester resin, which comprises subjecting the biodegradable and polymerizable polyester composition to a polycondensation reaction at least once, wherein the content of metals in the biodegradable polyester resin is 0.01% by weight to 7% by weight based on the total weight, and the dispersion index (DI) according to the above Equation 1 is 3.0 or more.

Another embodiment provides a biodegradable polyester film, which comprises the biodegradable polyester resin, wherein the biodegradable polyester resin is prepared from the biodegradable and polymerizable polyester composition, the content of metals in the biodegradable polyester resin is 0.01% by weight to 7% by weight based on the total weight, and the dispersion index (DI) according to the above Equation 1 is 3.0 or more.

**Advantageous Effects of Invention**

As the biodegradable and polymerizable polyester composition according to the embodiment comprises an inorganic filler in a certain content and satisfies a certain range of viscosity, it has excellent dispersibility during polymerization (polycondensation); thus, it is possible to control the content of metals in a biodegradable polyester resin prepared from the biodegradable polyester polymerization composition and the dispersion index within optimal ranges.

In addition, the biodegradable polyester resin, in which the content of metals in the biodegradable polyester resin and the dispersion index are controlled within optimal ranges, can enhance transparency and tensile strength and can provide a biodegradable film with excellent properties for packaging by lowering the static friction coefficient and oxygen permeability.

In addition, as the biodegradable and polymerizable polyester composition comprising an inorganic filler is subjected to a polycondensation reaction in the process for preparing a biodegradable polyester resin according to the embodiment, the dispersibility during the polycondensation reaction is very excellent, which can suppress the aggregation of inorganic filler particles and prevent filter clogging, resulting in a decrease in defects such as voids in the processing. Thus, it is possible to provide a biodegradable film and molded article of excellent quality.

**Best Mode for Carrying out the Invention**

Hereinafter, the present invention will be described in detail with reference to embodiments. The embodiments are not limited to those described below. Rather, they can be modified into various forms as long as the gist of the invention is not altered.

Throughout the present specification, when a part is referred to as "comprising" an element, it is understood that other elements may be comprised, rather than other elements are excluded, unless specifically stated otherwise.

In addition, all numbers expressing the physical properties, dimensions, and the like of elements used herein are to be understood as being modified by the term "about" unless otherwise indicated.

Throughout the present specification, the terms first, second, and the like are used to describe various components. But the components should not be limited by the terms. The terms are used only for the purpose of distinguishing one component from another.

In an embodiment, as the biodegradable and polymerizable polyester composition comprising an inorganic filler in a certain content is subjected to polycondensation to prepare a biodegradable polyester resin, it is possible to control the content of metals in the biodegradable polyester resin and the dispersion index (DI) within certain ranges. As a result, it is possible to further enhance transparency and to reduce voids in the processing, thereby enhancing tensile strength while reducing oxygen permeability, resulting in enhanced oxygen barrier properties. Thus, it can be used in various ways as a packaging material. Further, the technical feature resides in that it is possible to achieve excellent dispersibility without a dispersant, making it possible to provide an environmentally friendly packaging material of high quality in an economical and efficient way since it is biodegradable and can exhibit excellent properties.

**[Biodegradable and polymerizable polyester composition]**

The biodegradable and polymerizable polyester composition according to an embodiment comprises an aliphatic polymerizable polyester composition or an aliphatic-aromatic polymerizable polyester composition; and an inorganic filler, wherein the aliphatic polymerizable polyester composition is at least one selected from the group consisting of a lactide monomer and ring-opening prepolymers thereof, the aliphatic-aromatic polymerizable polyester composition is at least one selected from the group consisting of a monomer composition comprising a diol component and a dicarboxylic acid component and a prepolymer of part or all of the monomer composition, the inorganic filler is employed in an amount of 0.1% by weight to 10% by weight based on the total weight of the biodegradable and polymerizable polyester composition, and the biodegradable and polymerizable polyester composition has a viscosity of 5,000 to 15,000 poise at 240°C.

Specifically, the biodegradable and polymerizable polyester composition may comprise an aliphatic polymerizable polyester composition or an aliphatic-aromatic polymerizable polyester composition.

The aliphatic polymerizable polyester composition may be at least one selected from the group consisting of a lactide monomer and ring-opening prepolymers thereof.

The lactide monomer may comprise L-lactide, D-lactide, or a combination thereof.

The aliphatic-aromatic polymerizable polyester composition may be at least one selected from the group consisting of a monomer composition comprising a diol component and a dicarboxylic acid component and a prepolymer of part or all of the monomer composition.

For example, the aliphatic-aromatic polymerizable polyester composition may comprise a prepolymer obtained by mixing a diol component and an aromatic dicarboxylic acid component to obtain a slurry, and subjecting a mixture comprising the slurry and an aliphatic dicarboxylic acid or a mixture of a reaction product obtained by esterification of the slurry and an aliphatic dicarboxylic acid to an esterification reaction at least once.

The diol component may comprise 1,4-butanediol, 1,2-ethanediol, 1,3-propanediol, or a derivative thereof.

The aromatic dicarboxylic acid component may comprise terephthalic acid, dimethyl terephthalate, or a derivative thereof.

The aliphatic dicarboxylic acid component may comprise adipic acid, succinic acid, sebacic acid, or a derivative thereof.

Meanwhile, the biodegradable and polymerizable polyester composition may comprise an inorganic filler in an amount of 0.1% by weight to 10% by weight based on the total weight of the biodegradable and polymerizable polyester composition.

In general, inorganic fillers are used for the purpose of enhancing slip properties during processing. However, since polylactic acid (PLA), polybutyleneadipate terephthalate (PBAT), polybutylene succinate (PBS), polybutyleneadipate (PBA), and polycaprolactone (PCL) commonly used as biodegradable polymers have a high number average molecular weight of at least 40,000, if an inorganic filler is added to the polymerization process, the reaction may be delayed or may not proceed.

Meanwhile, if an inorganic filler and a biodegradable polyester resin are compounded (blended), a large amount of the inorganic filler is required to achieve the above effect. Further, since the compatibility between a biodegradable polyester resin and an inorganic filler is poor, there is a problem in that voids may be formed during blow molding and/or during extrusion stretching, which may cause bubbles to burst or break, resulting in reduced productivity, and may serve as internal and surface defects of the film.

According to an embodiment of the present invention, in order to efficiently achieve the desired effect while implementing optimal dispersibility, the content of an inorganic filler is adjusted, and the specific surface area and particle size range of the inorganic filler, the pretreatment process thereof, the timing of addition thereof, and the like are adjusted. Thus, the above problems are solved, whereby the dispersibility in the polymerization process is enhanced, and the content of metals in a biodegradable polyester resin prepared from the biodegradable and polymerizable polyester composition and the dispersion index are controlled to the optimal ranges. As a result, the surface roughness, haze, static friction coefficient, oxygen permeability, and tensile strength of a biodegradable polyester sheet or film can be improved overall.

Specifically, the biodegradable and polymerizable polyester composition may comprise the inorganic filler in an amount of 0.1% by weight to 10% by weight, 0.5% by weight to 9% by weight, 1% by weight to 9% by weight, 1% by weight to 8% by weight, 1% by weight to 6% by weight, 1% by weight to 5% by weight, 2% by weight to 5% by weight, 3% by weight to 5% by weight, or 4% by weight to 6% by weight, based on the total weight of the biodegradable and polymerizable polyester composition.

If the content of the inorganic filler satisfies the above range, aggregation of the inorganic filler can be minimized, defects such as voids can be reduced, and dispersibility can be enhanced. Thus, it may be more advantageous for achieving the desired effects in the present invention, that is, enhancing transparency and tensile strength and reducing surface roughness, friction coefficient, and oxygen permeability.

If the content of the inorganic filler is less than the above range, it may be difficult to achieve the desired effect in the present invention. If the above range is exceeded, surface roughness and haze increase, oxygen permeability increases, and tensile strength decreases, which may cause various problems when it is used as a packaging material.

The inorganic filler may comprise at least one selected from the group consisting of $SiO_2$, $CaCO_3$, $TiO_2$, $BaSO_4$, and $Al_2O_3$. Specifically, the inorganic filler may comprise at least one selected from the group consisting of $SiO_2$, $CaCO_3$, and $TiO_2$. When the inorganic filler is employed, it may be more advantageous for enhancing slip properties during processing.

Meanwhile, according to an embodiment of the present invention, the specific surface area and average particle diameter of the inorganic filler can be controlled within a specific range, which may be more advantageous for enhancing dispersibility during polymerization and for enhancing the mechanical strength of a biodegradable polyester sheet, film, or molded article.

The inorganic filler may have a specific surface area (Brunauer-Emmett-Teller; BET) of, for example, 1,000 $m^2$/g or less, 900 $m^2$/g or less, 800 $m^2$/g or less, 600 $m^2$/g or less, 500 $m^2$/g or less, 400 $m^2$/g or less, 300 $m^2$/g or less, or 250 $m^2$/g or less, and 20 $m^2$/g or more, 30 $m^2$/g or more, 40 $m^2$/g or more, 50 $m^2$/g or more, greater than 50 $m^2$/g, 55 $m^2$/g or more, 60 $m^2$/g or more, 70 $m^2$/g or more, 80 $m^2$/g or more, or 100 $m^2$/g or more. The specific surface area may be measured using, for example, a BET specific surface area analyzer (Brunauer Emmett Teller, model name ASAP 2020 (Micromeritics)).

If the specific surface area of the inorganic filler satisfies the above range, it is possible to prevent the inorganic filler particles from aggregating, it is advantageous for adjusting the content of metals in the biodegradable polyester resin and the dispersion index desired in the present invention to the optimal ranges, and it is possible to further enhance the surface roughness and mechanical strength of a biodegradable polyester sheet. If the specific surface area of the inorganic filler exceeds the above range, the inorganic filler particles tend to aggregate into secondary particles. Even when they are dispersed, they would lose stability to re-aggregate.

In addition, the inorganic filler may have an average particle diameter (D50) of, for example, 15 μm or less, 13 μm or less, 12 μm or less, 10 μm or less, 8 μm or less, 7 μm or less, 6 μm or less, 5 μm or less, 4 μm or less, or 3 μm or less. In addition, the inorganic filler may have an average particle diameter (D50) of, for example, 0.1 μm or more, 0.3 μm or more, 0.5 μm or more, 0.6 μm or more, 0.7 μm or more, 0.8 μm or more, or 1 μm or more. The average particle diameter (D50) of the inorganic filler may refer to a particle diameter when the cumulative volume is 50% or a value measured as a median diameter. It may be measured using a particle size analyzer Microtrac S 3500 in a particle size distribution (PSD). If the average particle diameter (D50) of the inorganic filler satisfies the above range, it is possible to prevent the inorganic filler particles from aggregating, it is advantageous for adjusting the content of metals in the biodegradable polyester resin and the dispersion index desired in the present invention to the optimal ranges, and it is possible to further enhance the surface roughness and mechanical strength of a biodegradable polyester sheet.

Meanwhile, the inorganic filler may be an inorganic filler pretreated by at least one method selected from pretreatment with ultrasonic treatment, a mixer tank, a high-pressure homogenizer, and a dispersant.

If the inorganic filler is pretreated by the above method, the dispersion can be further expedited in the polycondensation step. In particular, there is an advantage in that aggregation does not take place even during the transport to each reactor, thereby preventing filter clogging, and excellent dispersibility can be achieved without the addition of a dispersant.

Specifically, the ultrasonic treatment is a method of physically crushing or pulverizing the inorganic filler with waves generated by emitting ultrasound of 20 kHz into a solution.

The ultrasonic treatment may be carried out for less than 30 minutes with an energy dose of 50,000 J or less.

For example, the ultrasonic pretreatment may be carried out for 25 minutes or less, 20 minutes or less, or 18 minutes or less with an energy dose of 25,000 J or less or 22,000 J or less. As the energy dose and the operation time satisfy the above ranges, the effect of the ultrasonic treatment, that is, the enhancement in dispersibility can be maximized. If the energy dose exceeds the above range, the inorganic filler may be re-aggregated, thereby deteriorating the dispersibility. In addition, if the inorganic filler particles are aggregated or re-aggregated, the surface roughness of a biodegradable polyester sheet or film prepared from the biodegradable and polymerizable polyester composition becomes non-uniform, resulting in a lot of scattering when light is incident, thereby reducing transparency.

The pretreatment with a mixer tank may be carried out by using a slurry tank with a dust explosion-proof facility specification in which the inorganic filler is agitated for 1 hour or longer at room temperature at a speed of about 2,000 rpm or less, for example, 200 to 2,000 rpm, 300 to 2,000 rpm, 500 to 2,000 rpm, 200 to 1,000 rpm, 250 to 1,000 rpm, or 300 to 1,000 rpm.

The pretreatment with a high-pressure homogenizer may be a pretreatment method by a machine in which a high-pressure fluid is passed at a high speed through small gaps in an interaction chamber, at which time the fluid forms a supersonic flow due to a rapid drop in pressure, and impact, cavitation, turbulent flow, and shear force is applied to the particles in the fluid to break the inorganic filler into uniform fine particles in a homogeneous state. The pretreatment with a high-pressure homogenizer may be carried out under pressure conditions of 5,000 to 40,000 psi.

The pretreatment with a dispersant may be carried out by dispersing the inorganic filler in a dispersant. The dispersant may comprise at least one selected from the group consisting of polymeric or monomeric acidity regulators, surface modifiers, and emulsifiers. For example, it may comprise at least one selected from the group consisting of siloxane-based polyols, stearic acid-based fatty acids, and surfactants.

In addition, when the inorganic filler is added, an additional diol component (a third diol component) may be added in order to enhance dispersibility and reactivity.

When a biodegradable polyester resin is prepared by polycondensation of the biodegradable and polymerizable polyester composition comprising the inorganic filler according to an embodiment of the present invention, it is possible to further enhance dispersibility as compared with the case where the polyester resin and the inorganic filler are compounded (blended), to reduce voids to enhance the bubble stability during processing, to enhance elongation and tensile strength, and to minimize filter clogging, thereby further enhancing processability and moldability.

The biodegradable and polymerizable polyester composition may have a viscosity of, for example, 5,000 poise or more, 6,000 poise or more, 6,500 poise or more, 7,000 poise or more, or 8,000 poise or more at 240°C. In addition, the biodegradable and polymerizable polyester composition may have a viscosity of, for example, 15,000 poise or less, 13,000 poise or less, 12,000 poise or less, 11,000 poise or less, or 10,000 poise or less. Specifically, the viscosity of the biodegradable and polymerizable polyester composition may be, for example, 6,000 to 13,000 poise, 7,000 to 13,000 poise, 6,000 to 12,000 poise, 6,000 to 11,000 poise, or 6,000 to 10,000 poise.

If the viscosity of the biodegradable and polymerizable polyester composition satisfies the above range, it is possible to further enhance the dispersibility during the polycondensation reaction to enhance the mechanical strength of a biodegradable resin, as well as reduce the surface roughness, haze, static friction coefficient, and oxygen permeability of a biodegradable polyester sheet or film, and it may be more advantageous for achieving combined physical properties such as dispersion index (DI) and processability reduction index (PRI) at an optimal level. The viscosity is the viscosity of the biodegradable and polymerizable polyester composition measured immediately after the inorganic filler is added. It is measured as dynamic viscosity using a dynamic viscometer, RDS (Rheometrics Dynamic Spectrometer, TA manufacturer: Instrument, Discovery HR 30) while the angular velocity per second (1 rad/sec) is increased at a temperature of 240°C (1 rad/sec being 9.5 rpm). The viscosity may vary depending on the shear rate.

Meanwhile, according to an embodiment of the present invention, a biodegradable polyester masterbatch may be prepared from the biodegradable and polymerizable polyester composition.

The biodegradable polyester masterbatch may be prepared by a conventional method from the biodegradable and polymerizable polyester composition.

As it is in-situ polymerized using the biodegradable polyester masterbatch, it is possible to further enhance dispersibility, to reduce the formation of defects such as voids during the processing to further increase tensile strength, and to reduce oxygen permeability, thereby providing a biodegradable film with excellent characteristics for packaging.

**[Biodegradable polyester resin]**

The biodegradable polyester resin according to an embodiment is prepared from the biodegradable and polymerizable polyester composition, wherein the content of metals in the biodegradable polyester resin is 0.01% by weight to 7% by weight based on the total weight, and the dispersion index (DI) according to the following Equation 1 is 3.0 or more.

[Equation 1]

$$Dispersion\ index\ (DI) = \frac{TS}{OP} \times 100$$

In Equation 1, TS and OP are values, exclusive of units, measured for a specimen of a biodegradable polyester sheet prepared from the biodegradable polyester resin.

TS is the tensile strength (MPa) measured at a tensile speed of 100 mm/minute using a universal testing machine for a specimen prepared to an ASTM D638 V type, and OP is the oxygen permeability ($cc/m^2 \cdot day \cdot atm$) measured at a temperature of 25°C and a relative humidity (RH) of 0% using OX-TRAN 702 for a specimen made to have a thickness of 500 $\mu$m in accordance with ASTM D3985.

As the biodegradable and polymerizable polyester composition is used, the content of metals in the biodegradable polyester resin can satisfy a certain range. As a result, the surface roughness, haze, static friction coefficient, oxygen permeability, and tensile strength of a biodegradable polyester sheet or film can be improved overall, and combined physical properties such as dispersion index (DI) and processability reduction index (PRI) at an optimal level can be achieved.

For example, the content of metals in the biodegradable polyester resin may be 0.015% by weight or more, 0.02% by weight or more, 0.03% by weight or more, 0.05% by weight or more, greater than 0.05% by weight, 0.07% by weight or more, 0.09% by weight or more, or 0.1% by weight or more, and 7% by weight or less, 6% by weight or less, or 5% by weight or less, based on the total weight of the biodegradable and polymerizable polyester composition. In addition, the content of metals in the biodegradable polyester resin may be, for example, 0.015% by weight to 6.8% by weight, greater than 0.015% by weight to 6.8% by weight, 0.02% by weight to 6.8% by weight, 0.03% by weight to 6.8% by weight, 0.05% by weight to 6.8% by weight, 0.06% by weight to 6.8% by weight, 0.06% by weight to 6.5% by weight, 0.06% by weight to 6% by weight, 0.06% by weight to 5% by weight, 0.1% by weight to 4% by weight, or 0.1% by weight to 3% by weight, based on the total weight of the biodegradable and polymerizable polyester composition.

The content of metals in the biodegradable polyester resin may vary with the content of the inorganic filler employed in the biodegradable and polymerizable polyester composition.

If the content of metals in the biodegradable polyester resin satisfies the above range, it may be more advantageous for enhancing the transparency and tensile strength of a biodegradable polyester sheet or film prepared from the biodegradable polyester resin and for reducing the surface roughness, friction coefficient, and oxygen permeability thereof.

If the content of metals in the biodegradable polyester resin is less than the above range, there may be a problem in that the slip properties during processing may be deteriorated. If the content of metals exceeds the above range, there may be a problem in that they may re-aggregate to form protrusions.

The metals contained in the biodegradable polyester resin may comprise at least one selected from the group consisting of Si, Ca, Ti, Ba, and Al. Specifically, the metals contained in the biodegradable polyester resin may comprise at least one selected from the group consisting of Si, Ca, and Ti. If the above metal is employed, it may be more advantageous for enhancing slip properties during processing.

Meanwhile, the content of residual inorganic substances contained in the biodegradable polyester resin may be 0.02% by weight to 8% by weight. Specifically, the content of residual inorganic substances contained in the biodegradable polyester resin may be 0.02% by weight to 7% by weight, 0.1% by weight to 6.5% by weight, 0.2% by weight to 6.5% by weight, 0.2% by weight to 6% by weight, or 0.5% by weight to 5% by weight.

The residual inorganic substances are residues of the inorganic filler contained in the biodegradable polyester resin and may comprise at least one selected from the group consisting of $SiO_2$, $CaCO_3$, $TiO_2$, $BaSO_4$, and $Al_2O_3$.

Meanwhile, the biodegradable polyester resin may have a dispersion index (DI) of 3.0 or more according to Equation 1.

The dispersion index (DI) refers to the ratio of the tensile strength (TS) of a biodegradable polyester sheet prepared from the biodegradable polyester resin to the oxygen permeability (OP) of the biodegradable polyester sheet. It indicates whether inorganic filler particles are properly dispersed during the polymerization process for the preparation of the biodegradable resin. It may also indicate the degree of dispersion of metals and/or residual inorganic particles formed from the inorganic filler and present in the biodegradable polyester resin. In addition, the oxygen permeability (OP) and tensile strength of a biodegradable polyester sheet or film prepared from the biodegradable polyester resin may vary accordingly.

For example, the lower the oxygen permeability (OP) of a biodegradable polyester sheet prepared from the biodegradable polyester resin, and the higher the tensile strength of the biodegradable polyester sheet, the higher the dispersion index (DI).

That is, when the oxygen permeability (OP) of the biodegradable polyester sheet is low, or when the tensile strength of the biodegradable polyester sheet is high, it means that inorganic filler particles are properly dispersed during the polymerization process for the preparation of the biodegradable resin.

The dispersion index (DI) may be, for example, 3.2 or more, 3.5 or more, 4.0 or more, 4.2 or more, 4.3 or more, 4.5 or more, 4.6 or more, or 5.0 or more. In addition, the dispersion index (DI) may be, for example, 15.0 or less, 12.0 or less, 11.0 or less, 10.0 or less, 9.5 or less, 9.0 or less, or 8.0 or less.

If the dispersion index (DI) satisfies the above range, the oxygen permeability (OP) of a biodegradable polyester sheet prepared from the biodegradable polyester resin can be lowered, while its tensile strength can be further enhanced.

According to an embodiment of the present invention, the oxygen permeability (OP) of a biodegradable polyester sheet prepared from the biodegradable polyester resin may be, for example, 800 cc/m$^2$·day·atm or less, 10 to 800 cc/m$^2$·day·atm, 20 to 800 cc/m$^2$·day·atm, 30 to 780 cc/m$^2$·day·atm, 30 to 770 cc/m$^2$·day·atm, 30 to 750 cc/m$^2$·day atm, 30 to 700 cc/m$^2$·day atm, or 30 to 650 cc/m$^2$·day atm.

If the oxygen permeability (OP) of a biodegradable polyester sheet satisfies the above range, it may be more advantageous for use as a packaging material, particularly, a packaging material for food, by virtue of its excellent oxygen barrier properties. If the oxygen permeability (OP) of a biodegradable polyester sheet exceeds 800 cc/m$^2$·day atm, it may cause various problems when used as a packaging material due to its poor oxygen barrier properties.

According to an embodiment of the present invention, the tensile strength of a biodegradable polyester sheet prepared from the biodegradable polyester resin may be, for example, 35 MPa or more, 35 MPa to 100 MPa, 35 MPa to 90 MPa, 35 MPa to 80 MPa, 35 MPa to 60 MPa, 37 MPa to 55 MPa, or 38 MPa to 50 MPa.

If the tensile strength (TS) satisfies the above range, it is more advantageous for achieving dispersion index (DI) in the above specific range, and the durability of a packaging material can be further enhanced since the range of tensile strength is appropriate.

Meanwhile, the biodegradable polyester resin may have a processability reduction index (PRI) of 100 or less according to the following Equation 2:

$$[\text{Equation 2}]$$

$$\text{Processability reduction index (PRI)} = \text{Ra} + \text{Hz}$$

In Equation 2, Ra and Hz are values, exclusive of units, measured for a specimen of a biodegradable polyester sheet prepared from the biodegradable polyester resin.

Ra is the centerline mean roughness (Ra) (nm) calculated by cutting a sheet to a length of 3 cm and a width of 3 cm according to JIS B0601 to prepare a specimen and then measuring the two-dimensional surface roughness at 5 or more points on the surface of the specimen using a surface roughness meter.

Hz is the haze (%) measured using a haze meter for a specimen prepared by cutting a sheet to a length of 5 cm, a width of 5 cm, and a thickness of 25 $\mu$m according to ASTM D1003.

The processability reduction index (PRI) of the biodegradable polyester resin refers to the sum of the centerline mean roughness (Ra) and haze of a biodegradable polyester sheet prepared from the biodegradable polyester resin. That is, the centerline mean roughness (Ra) and haze (Hz) of a biodegradable polyester sheet vary with the degree of aggregation of inorganic filler particles in the biodegradable polyester resin, which may have a significant impact on processability. In addition, if the inorganic filler particles are aggregated, the surface roughness of the biodegradable polyester sheet or film becomes non-uniform, resulting in a lot of scattering when light is incident, thereby causing a problem in that the transparency of the biodegradable polyester sheet or film is reduced, and the inorganic filler particles precipitate or remain as internal defects.

The lower the centerline mean roughness (Ra) of the biodegradable polyester sheet or film, or the lower the haze thereof, the lower the processability reduction index (PRI) of the biodegradable polyester resin. In addition, the lower the processability reduction index (PRI) of the biodegradable polyester resin, the more advantageous for providing a biodegradable film with excellent characteristics for packaging.

The processability reduction index (PRI) of the biodegradable polyester resin may be, for example, 100 or less, 99 or less, 98 or less, 97 or less, 95 or less, 90 or less, 85 or less, 82 or less, 80 or less, or 78 or less. Specifically, the processability reduction index (PRI) of the biodegradable polyester resin may be, for example, 30 to 100. If the processability reduction index (PRI) of the biodegradable polyester resin satisfies the above range, it is more advantageous for processing and it is possible to have excellent slip properties and to further reduce the defects on the inside or surface of a biodegradable film, which may be advantageous for providing a packaging material of high quality.

The centerline mean roughness (Ra) (nm) of a biodegradable polyester sheet prepared from the biodegradable polyester resin may be calculated by cutting the sheet to a length of 3 cm and a width of 3 cm according to JIS B0601 to prepare a specimen and then measuring the two-dimensional surface roughness at 5 or more points on the surface of the specimen. It may be measured with AFM equipment (e.g., manufacturer: Park System, equipment name: XE-150). For example, the centerline mean roughness (Ra) is an arithmetic average roughness of the deviation of the roughness curve from the average line according to JIS 0161. The sum of the upper and lower sides of the centerline in the reference length is obtained, which is divided by the length of the measured section.

The centerline mean roughness (Ra) of the biodegradable polyester sheet may be, for example, 50 nm or less, 48 nm or less, 47 nm or less, 46 nm or less, 45 nm or less, 42 nm or less, 40 nm or less, or 39 nm or less, specifically, 10 nm to 50 nm.

If the centerline mean roughness (Ra) of the biodegradable polyester sheet satisfies the above range, it may be more advantageous for achieving the desired effect in the present invention. If the centerline mean roughness (Ra) of the biodegradable polyester sheet exceeds 50 nm, the surface roughness becomes non-uniform, resulting in a lot of scattering when light is incident, thereby reducing the transparency of the biodegradable polyester sheet or film.

According to another embodiment of the present invention, the biodegradable polyester sheet prepared from the biodegradable polyester resin may have a low haze of 50% or less, resulting in excellent transparency. Thus, it has the advantage of being widely used for applications that require transparency.

Specifically, the haze of the biodegradable film may be 48% or less, 45% or less, 43% or less, or 40% or less. If the haze exceeds the above range, its use may be limited due to a lack of transparency.

Meanwhile, according to another embodiment of the present invention, the biodegradable polyester sheet prepared from the biodegradable polyester resin may have a static friction coefficient of 5 or less, for example, 4.5 or less, 4 or less, 3.5 or less, 3.2 or less, 3 or less, 2.8 or less, 2.5 or less, 2.2 or less, or 2.1 or less. The static friction coefficient may be measured as a static friction coefficient using a friction coefficient tester (QM110CF) of Qmesys when one surface of a specimen of the biodegradable polyester sheet is brought into contact with stainless steel (SUS) and then slid according to ASTM D1894.

Meanwhile, the intrinsic viscosity of the biodegradable polyester resin may be similar, or equal, to the viscosity of the biodegradable and polymerizable polyester composition at 240°C as described above. For example, the intrinsic viscosity of the biodegradable polyester resin may be 5,000 poise or more, 6,000 poise or more, 6,500 poise or more, 7,000 poise or more, or 8,000 poise or more, and 15,000 poise or less, 13,000 poise or less, 12,000 poise or less, 11,000 poise or less, or 10,000 poise or less. In addition, the intrinsic viscosity of the biodegradable polyester resin may be, for example, 6,000 poise to 13,000 poise, 7,000 poise to 13,000 poise, 6,000 poise to 12,000 poise, 6,000 poise to 11,000 poise, or 6,000 poise to 10,000 poise. The viscosity is measured, immediately after the polymerization, as dynamic viscosity using a dynamic viscometer, RDS (Rheometrics Dynamic Spectrometer, TA manufacturer: Instrument, Discovery HR 30) while the angular velocity per second (1 rad/sec) is increased at a temperature of 240°C (1 rad/sec being 9.5 rpm).

If the viscosity of the biodegradable polyester resin satisfies the above range, it is possible to reduce the formation of defects such as voids during the processing to further enhance processability, productivity, and moldability and to obtain excellent mechanical properties and reduced oxygen permeability, thereby providing a biodegradable film with excellent characteristics for packaging.

In addition, the biodegradable polyester resin may have a number average molecular weight of 30,000 g/mole to 100,000 g/mole. It may be 40,000 g/mole to 90,000 g/mole or 40,000 g/mole to 80,000 g/mole. The number average molecular weight may be measured using gel permeation chromatography (GPC). Specifically, various data such as Mn, Mw, and Mp may be obtained by gel permeation chromatography. The molecular weight may be measured as a number average molecular weight (Mn) among them. As the number average molecular weight of the polymer satisfies the above range, the strength and processability can be further enhanced.

Meanwhile, when the biodegradable polyester resin is measured for the filter pressure in an extruder equipped with a single screw and a 40-$\mu$m mat filter, the filter pressure difference ($\Delta$FP) according to the following Equation 3 may be 100 kg/cm$^2$ or less.

$$[\text{Equation 3}]$$

$$\Delta FP = \left| FP_0 - FP_2 \right|$$

In Equation 3, $FP_0$ is the initial pressure (kg/cm$^2$) applied to a filter when the biodegradable polyester resin is extruded at 240°C, and $FP_2$ is the pressure (kg/cm$^2$) applied to the filter when the biodegradable polyester resin is extruded at 240°C for 2 hours.

The filter pressure difference ($\Delta$FP) is the absolute value of the difference between the initial pressure (kg/cm$^2$) applied to a filter when it is extruded at 240°C and the pressure (kg/cm$^2$) applied to the filter when it is extruded at the same temperature for 2 hours, which refers to the rate of change in filter pressure.

If inorganic filler particles are well dispersed during the polycondensation reaction of the biodegradable polyester resin, the filter pressure difference ($\Delta$FP) is small. If inorganic filler particles are not well dispersed, aggregation may take place to cause filter clogging, resulting in an increase in filter pressure, or the filter may burst, which may cause problems in productivity, processability, and moldability. Thus, it is very important to control the filter pressure difference ($\Delta$FP) within a specific range.

For example, the filter pressure difference ($\Delta$FP) may be 90 kg/cm$^2$ or less, 85 kg/cm$^2$ or less, 80 kg/cm$^2$ or less, 70 kg/cm$^2$ or less, 60 kg/cm$^2$ or less, 50 kg/cm$^2$ or less, 40 kg/cm$^2$ or less, 30 kg/cm$^2$ or less, or 20 kg/cm$^2$ or less. The smaller the filter pressure difference ($\Delta$FP) is within the above range, the more advantageous from the viewpoint of productivity, processability, and moldability.

Meanwhile, the biodegradable polyester resin may comprise an aliphatic polyester resin or an aliphatic-aromatic polyester resin. The aliphatic polyester resin may comprise polylactic acid (PLA), and the aliphatic-aromatic polyester resin may comprise a first repeat unit comprising a first diol residue and an aromatic dicarboxylic acid residue and a second repeat unit comprising a second diol residue and an aliphatic dicarboxylic acid residue.

The polylactic acid resin may comprise L-lactic acid, D-lactic acid, D,L-lactic acid, or a combination thereof.

Specifically, the polylactic acid resin may be a random copolymer of L-lactic acid and D-lactic acid. Here, the content of D-lactic acid may be, for example, 1% by weight to 5% by weight, 1% by weight to 4% by weight, 2% by weight to 4% by weight, 1% by weight to 2% by weight, or 2% by weight to 3% by weight, based on the total weight of the polylactic acid resin. If the content of D-lactic acid satisfies the above range, it may be advantageous from the viewpoint of enhancement in film stretching processability.

Here, the content of L-lactic acid may be, for example, 80% by weight to 99% by weight, 83% by weight to 99% by weight, 85% by weight to 99% by weight, 95% by weight to 99% by weight, 96% by weight to 99% by weight, 96% by weight to 98% by weight, or 96% by weight to 97% by weight, based on the total weight of the polylactic acid resin. If the content of L-lactic acid satisfies the above range, it may be advantageous from the viewpoint of enhancement in the characteristics of thermal resistance of the film.

The polylactic acid resin may have a melting temperature (Tm) of 100°C to 250°C, 110°C to 220°C, or 120°C to 200°C.

The polylactic acid resin may have a glass transition temperature (Tg) of 30°C to 80°C, 40°C to 80°C, 40°C to 70°C, or 45°C to 65°C.

The polylactic acid resin may have a melt viscosity ($V_{PLA}$) of, for example, 5,000 poise to 12,000 poise, 6,500 poise to 12,000 poise, 6,500 poise to 11,000 poise, 7,000 poise to 12,000 poise, 7,500 poise to 11,000 poise, or 8,000 poise to 10,000 poise, at 210°C. Here, the melt viscosity may be measured using a rheometer (RDS).

The biodegradable polyester resin according to an embodiment of the present invention may comprise a first repeat unit comprising a first diol residue and an aromatic dicarboxylic acid residue and a second repeat unit comprising a second diol residue and an aliphatic dicarboxylic acid residue.

The first and second diol residues each independently comprise a residue of 1,4-butanediol, 1,2-ethanediol, 1,3-propanediol, or a derivative thereof, the aromatic dicarboxylic acid residue comprises a residue of terephthalic acid, dimethyl terephthalate, or a derivative thereof, and the aliphatic dicarboxylic acid residue comprises a residue of adipic acid, succinic acid, sebacic acid, or a derivative thereof.

The biodegradable polyester resin having the above structure may enhance the biodegradability, water degradability, and physical properties of a biodegradable polyester sheet, film, or molded article prepared from the same.

The number of the first repeat unit may be 90 to 500, 90 to 400, 90 to 300, 90 to 200, 90 to 150, 90 to 140, 90 to 130, 90 to 120, 100 to 120, or 100 to 115.

The number of the second repeat unit may be 50 to 500, 50 to 400, 50 to 300, 50 to 200, 50 to 150, 55 to 120, 60 to 150, 60 to 130, 60 to 120, 80 to 150, 90 to 150, 95 to 150, 96 to 150, 96 to 130, 96 to 120, or 98 to 120.

If the number of the first repeat unit and the number of the second repeat unit each satisfy the above ranges, it is possible to achieve the desired molecular weight of the biodegradable polyester resin, to enhance the processability and physical properties, and to further enhance the mechanical properties, thermal resistance, and biodegradability of a biodegradable polyester sheet, film, or molded article prepared from the same. If the number of the first repeat unit and/or the second repeat unit is too small, the molecular weight of the biodegradable polyester resin is also reduced, making it difficult to achieve the desired physical properties.

Meanwhile, the biodegradable polyester resin may further comprise nanocellulose having an average particle size of 100 nm or more.

The average particle size of the nanocellulose may be, for example, 100 nm to 500 nm, 100 nm to 450 nm, 120 nm to 400 nm, 130 nm to 350 nm, 140 nm to 300 nm, or 150 nm to 300 nm.

As the average particle size of the nanocellulose satisfies the above ranges, it is possible to further enhance the biodegradability and physical properties of a biodegradable polyester resin or a biodegradable polyester sheet, film, or molded article prepared from the same.

The nanocellulose may be one or more selected from the group consisting of cellulose nanocrystal, cellulose nanofiber, microfibrillated cellulose, hydroxymethyl cellulose, hydroxyethyl cellulose, hydroxypropyl cellulose, hydroxypropylmethyl cellulose, cellulose acetate, methyl cellulose, ethyl cellulose, propyl cellulose, butyl cellulose, pentyl cellulose, hexyl cellulose, and cyclohexyl cellulose.

In addition, the nanocellulose may be pretreated with a bead mill or pretreated with ultrasound. Specifically, the nanocellulose may be obtained by pretreating nanocellulose dispersed in water with a bead mill or ultrasound.

First, the bead mill pretreatment may be carried out by a vertical mill or a horizontal mill as a wet milling apparatus. A horizontal mill is preferable in that the amount of beads that can be charged inside the chamber is greater, the machine's uneven wear is smaller, the wear of beads is smaller, and the maintenance and repair are convenient, but it is not limited thereto.

The bead mill pretreatment may be carried out using one or more beads selected from the group consisting of zirconium, zircon, zirconia, quartz, and aluminum oxide.

Specifically, the bead mill pretreatment may be carried out using beads having a diameter of 0.3 mm to 1 mm. For example, the diameter of beads may be 0.3 mm to 0.9 mm, 0.4 mm to 0.8 mm, 0.45 mm to 0.7 mm, or 0.45 mm to 0.6 mm. As the diameter of beads satisfies the above range, it is possible to further enhance the dispersibility of the nanocellulose. If the diameter of beads exceeds the above range, the average particle size and particle size deviation of the nanocellulose may increase, which may reduce the dispersibility.

In addition, it is preferable from the viewpoint of transfer of sufficient energy that the bead mill pretreatment is carried out with beads having a specific gravity greater than that of the nanocellulose. For example, the beads may be one or more selected from the group consisting of zirconium, zircon, zirconia, quartz, and aluminum oxide, which have a specific gravity greater than that of the nanocellulose dispersed in water. Zirconium beads having a specific gravity greater than that of the nanocellulose dispersed in water by 4 times or more are preferred, but they are not limited thereto.

In addition, the ultrasonic pretreatment is a method of physically crushing or pulverizing nanoparticles with waves generated by emitting ultrasound of 20 kHz into a solution.

The ultrasonic pretreatment may be carried out for less than 30 minutes with an energy dose of 30,000 J or less. For example, the ultrasonic pretreatment may be carried out for 25 minutes or less, 20 minutes or less, or 18 minutes or less with an energy dose of 25,000 J or less or 22,000 J or less. As the energy dose and the operation time satisfy the above ranges, the effect of the pretreatment with ultrasound, that is, the enhancement in dispersibility can be maximized. If the energy dose exceeds the above range, the nanoparticles may be re-aggregated, thereby deteriorating the dispersibility.

The nanocellulose according to an embodiment may be pretreated with a bead mill or pretreated with ultrasound. Alternatively, the nanocellulose according to an embodiment may be pretreated with both a bead mill and ultrasound. In such an event, it is preferable that ultrasonic pretreatment is carried out after the bead mill pretreatment to prevent re-aggregation, thereby enhancing the dispersibility.

The biodegradable polyester resin according to an embodiment has a polydispersity index (PDI) of less than 2.0. For example, the polydispersity index of the biodegradable polyester resin may be less than 2.0, 1.95 or less, or 1.9 or less.

As the polydispersity index is adjusted to the above range, the thermal resistance can be further enhanced. Specifically, if the polydispersity index exceeds the above range, the thermal resistance of the biodegradable polyester resin may be deteriorated. Thus, in the process of preparing a molded article such as a film using the biodegradable polyester resin, the rate of degradation of the polymer may be increased, thereby reducing the processability and productivity.

The polydispersity index may be calculated according to the following Equation A.

[Equation A]

$$Polydispersity\ index = \frac{Mw}{Mn}$$

In Equation A, Mw is the weight average molecular weight (g/mole) of a resin, and Mn is the number average molecular weight (g/mole) of the resin.

**[Process for preparing a biodegradable polyester resin]**

According to an embodiment the present invention, there is provided a process for preparing a biodegradable polyester resin, which comprises subjecting the biodegradable and polymerizable polyester composition to a polycondensation reaction at least once, wherein the content of metals in the biodegradable polyester resin is 0.01% by weight to 7% by weight based on the total weight, and the dispersion index (DI) according to the above Equation 1 is 3.0 or more.

According to an embodiment of the present invention, when the biodegradable and polymerizable polyester composition containing the inorganic filler in a specific amount is subjected to a polycondensation reaction, it is possible to impart biodegradability, to reduce defects such as voids in the processing, to further increase tensile strength, and to lower oxygen permeability, thereby providing a biodegradable film with excellent characteristics for packaging in a simple, economical, and efficient preparation process. In addition, it is possible to minimize filter clogging during processing from the viewpoint of process, to reduce the difference between the initial filter pressure and the final filter pressure, thereby enhancing productivity and processability, and to solve the problem of bubble bursting or breakage.

Specifically, the process for preparing a biodegradable polyester resin may comprise a first step of subjecting a lactide monomer to a ring-opening polymerization or subjecting a diol component, an aromatic dicarboxylic acid component, and an aliphatic dicarboxylic acid component to an esterification reaction at least once to prepare a prepolymer; a second step of mixing the prepolymer and an inorganic filler to obtain a biodegradable and polymerizable polyester composition; and a third step of subjecting the biodegradable and polymerizable polyester composition to a polycondensation reaction at least once.

The process for preparing a biodegradable polyester resin may comprise subjecting a lactide monomer to a ring-opening polymerization or subjecting a diol component, an aromatic dicarboxylic acid component, and an aliphatic dicarboxylic acid component to an esterification reaction at least once to prepare a prepolymer (first step).

In the first step, the ring-opening polymerization of a lactide monomer may be carried out at 200°C to 300°C for 4 hours to 6 hours. A catalyst may be added during the ring-opening polymerization, and the catalyst may be selected from the group consisting of a tin-based catalyst and a tetrabutyl titanate catalyst. The catalyst may be employed in an amount of 100 ppm to 1,000 ppm, 200 ppm to 800 ppm, or 200 ppm to 600 ppm, based on the total weight of the raw materials, for example, the total weight of the diol component, the aromatic dicarboxylic acid component, and the aliphatic dicarboxylic acid component.

Meanwhile, in the first step, the step of subjecting a diol component, an aromatic dicarboxylic acid component, and an aliphatic dicarboxylic acid component to an esterification reaction at least once may comprise mixing a diol component and an aromatic dicarboxylic acid component to obtain a slurry; and subjecting a mixture comprising the slurry and an aliphatic dicarboxylic acid or a mixture of a reaction product obtained by esterification of the slurry and an aliphatic dicarboxylic acid to an esterification reaction at least once.

As a diol component and an aromatic dicarboxylic acid are mixed and formed into a slurry, the diol component and the aromatic dicarboxylic acid can be uniformly reacted, and it is effective for expediting the esterification reaction, whereby the reaction efficiency can be increased.

In particular, if an aromatic dicarboxylic acid such as terephthalic acid has complete crystallinity and is in a powder form, its solubility in the diol is very low, whereby it may be difficult to carry out a homogeneous reaction. Thus, the step of forming a slurry may play a very important role in providing a biodegradable polyester resin, sheet, film, and molded article having excellent physical properties according to an embodiment of the present invention and enhancing the reaction efficiency.

In addition, in the case where all of a diol component, an aromatic dicarboxylic acid, and an aliphatic dicarboxylic acid are mixed and subjected to an esterification reaction, without the step of mixing the diol component and the aromatic dicarboxylic acid to form a slurry, the reaction of the diol component and the aliphatic dicarboxylic acid may be preferentially carried out. Thus, it may be difficult to achieve the effects desired in the present invention.

According to an embodiment of the present invention, in the case where the aromatic dicarboxylic acid component is terephthalic acid, terephthalic acid is a white crystal that has perfect crystallinity and sublimes at a temperature of about 300°C under normal pressure without a melting point, and it has very low solubility in the diol component, making it difficult to carry out a homogeneous reaction. In the case where the step of forming a slurry is performed before the esterification reaction, a uniform reaction can be induced by increasing the surface area thereof for reacting with the diol component in the solid matrix of terephthalic acid.

In addition, according to an embodiment of the present invention, in the case where the aromatic dicarboxylic acid component is dimethyl terephthalate, dimethyl terephthalate may be made into a molten state at about 142°C to 170°C by the step of forming a slurry to be reacted with the diol. Thus, it is possible to carry out the esterification reaction more quickly and efficiently.

Meanwhile, in the step of forming a slurry, the structure and physical properties of the biodegradable polyester resin may vary depending on the particle size, particle size distribution, conditions for forming a slurry, and the like of the aromatic dicarboxylic acid component.

For example, the aromatic dicarboxylic acid component may comprise terephthalic acid, and terephthalic acid may have an average particle diameter (D50) of 400 μm or lower, for example, 10 μm to 400 μm, in a particle size distribution (PSD) measured by a particle size analyzer Microtrac S3500 and a standard deviation of the average particle diameter (D50) of 100 or less. The standard deviation refers to the square root of variance.

The average particle diameter (D50) of terephthalic acid may be, for example, 20 μm to 200 μm, 30 μm to 180 μm, 50 μm to 150 μm, or 50 μm to 100 μm. If the average particle diameter (D50) of terephthalic acid satisfies the above range, it may be more advantageous in terms of solubility enhancement in a diol component and reaction rate.

If the average particle diameter (D50) of terephthalic acid is less than 10 μm, the average particle diameter is too small, so that primary particles may be undesirably converted to aggregated secondary particles. If the average particle diameter (D50) of terephthalic acid exceeds 400 μm, the average particle diameter is too large, so that the solubility in diols is reduced, thereby lowering the reaction rate, and it may be difficult to achieve a homogenization reaction.

In addition, the standard deviation of the average particle diameter (D50) may be 100 or less, for example, 5 to 90, 5 to 80, 5 to 70, 10 to 70, 15 to 70, or 15 to 50. If the standard deviation of the average particle diameter (D50) satisfies the above range, it may be more advantageous in terms of solubility enhancement in a diol component and reaction rate.

Further, if the average particle diameter (D50) and the standard deviation thereof each satisfy the above ranges, the reaction time can be shortened by 1.5 times or more, so that it may be preferable in terms of reaction efficiency.

If the aromatic dicarboxylic acid component is dimethyl terephthalate, it may be used in a molten state, or it, when measured in a particle state, may have an average particle diameter (D50) and a standard deviation thereof similar to those of terephthalic acid.

In the step of forming a slurry, the diol component and the aromatic dicarboxylic acid component may be mixed and put into a slurry agitator (tank).

According to an embodiment of the present invention, in the step of forming a slurry, the agitating force until the slurry is formed is very important; thus, the number and shape of agitating blades of the agitator and the conditions for forming a slurry are very important.

It may be more advantageous for producing an efficient agitating effect that the slurry agitator is, for example, an anchor type at the bottom, has a height to the agitator of 20 mm or more, and has two or more rotor blades.

For example, the slurry agitator may have a height to the agitator of 20 mm or more. That is, the reactor and the bottom of the agitator are almost contiguous to each other. In such a case, a slurry without precipitation can be obtained. If the number and shape of the blades of the agitator and/or the conditions for forming a slurry do not satisfy the above conditions, when the diol component and the aromatic dicarboxylic acid component are initially mixed, the aromatic dicarboxylic acid component may settle to the bottom, thereby causing phase separation.

The step of forming a slurry may comprise mixing the diol component and the aromatic dicarboxylic acid component and agitating the mixture at 60°C to 100°C and 50 rpm to 200 rpm for 10 minutes or longer, for example, 10 minutes to 200 minutes. If the above temperature, speed, and agitation time are satisfied, a homogeneous slurry can be obtained without phase separation, which is advantageous in terms of reaction efficiency, and the physical properties of the biodegradable polyester resin desired in the present invention can be efficiently obtained.

The diol component may comprise 1,4-butanediol, 1,2-ethanediol, 1,3-propanediol, or a derivative thereof.

Specifically, the diol component may comprise 1,4-butanediol, 1,2-ethanediol, 1,3-propanediol, or a derivative thereof in an amount of 95% by mole or more, 98% by mole or more, 99% by mole or more, or 100% by mole, based on the total number of moles of the diol component. As the diol component comprises 1,4-butanediol, 1,2-ethanediol, 1,3-propanediol, or a derivative thereof in the above amount, it is possible to enhance the biodegradability, water degradability, and physical properties of a biodegradable polyester resin or a biodegradable polyester sheet, film, or molded article prepared from the same.

The diol component may be added at once or dividedly. For example, the diol component may be added dividedly at the time of mixing with an aromatic dicarboxylic acid and mixing with an aliphatic dicarboxylic acid.

The aromatic dicarboxylic acid may comprise one or more selected from the group consisting of terephthalic acid, dimethyl terephthalate, and a derivative thereof. Specifically, the aromatic dicarboxylic acid may be terephthalic acid or dimethyl terephthalate.

In addition, the aromatic dicarboxylic acid component may be employed in an amount of 40% by mole to 60% by mole, 42% by mole to 58% by mole, 44% by mole to 58% by mole, 44% by mole to 57% by mole, 44% by mole to 55% by mole, 44% by mole to 53% by mole, or 46% by mole to 52% by mole, based on the total number of moles of the dicarboxylic acid component.

If the content of the aromatic dicarboxylic acid is controlled to the above range, it is more advantageous for producing the effects of the present invention, and it is possible enhance the physical properties, biodegradability, and water degradation reduction rate of a biodegradable polyester sheet, film, or molded article prepared from the same.

Meanwhile, in the esterification reaction, the reaction time may be shortened by using the slurry. For example, the reaction time may be shortened by 1.5 times or more by using the slurry.

The esterification reaction may be carried out at least once.

According to an embodiment of the present invention, in the esterification reaction, an aliphatic dicarboxylic acid component, or a diol component and an aliphatic dicarboxylic acid component, may be added to the slurry to carry out the esterification reaction once.

The esterification reaction may be carried out at 250°C or lower for 0.5 hour to 5 hours. Specifically, the esterification reaction may be carried out at atmospheric pressure or a reduced pressure at 180°C to 250°C, 185°C to 240°C, or 200°C to 240°C, until water as a by-product theoretically reaches 95%. For example, the esterification reaction may be carried out for 0.5 hour to 4.5 hours, 0.5 hour to 3.5 hours, or 1 hour to 3 hours, but it is not limited thereto.

The prepolymer may have a number average molecular weight of 500 g/mole to 10,000 g/mole. For example, the number average molecular weight of the prepolymer may be 500 g/mole to 8,500 g/mole, 500 g/mole to 8,000 g/mole, 500 g/mole to 7,000 g/mole, 500 g/mole to 5,000 g/mole, or 500 g/mole to 2,000 g/mole. As the number average molecular weight of the prepolymer satisfies the above range, it is possible to efficiently increase the molecular weight of the polymer in the polycondensation reaction.

According to another embodiment of the present invention, the esterification reaction may be carried out two or more times as a step of subjecting the slurry to a first esterification reaction; and a step of adding an aliphatic dicarboxylic acid, or a diol and an aliphatic dicarboxylic acid, to the product of the first esterification reaction and carrying out a second esterification reaction.

In the case where the esterification reaction is carried out two or more times, reaction stability and reaction uniformity may be enhanced as compared with the case where the esterification reaction is carried out once.

The first esterification reaction and the second esterification reaction may each be carried out at 250°C or lower for 0.5 hour to 5 hours. Specifically, the first esterification reaction and the second esterification reaction may each be carried out at atmospheric pressure and 180°C to 250°C, 185°C to 240°C, or 200°C to 240°C, until water as a by-product theoretically reaches 95%. For example, the first esterification reaction and the second esterification reaction may each be carried out for 0.5 hour to 4.5 hours, 0.5 hour to 3.5 hours, or 1 hour to 3 hours, but it is not limited thereto.

The aliphatic dicarboxylic acid component may comprise adipic acid, succinic acid, sebacic acid, or a derivative thereof. Specifically, the aliphatic dicarboxylic acid component may comprise adipic acid or succinic acid.

In addition, the aliphatic dicarboxylic acid component may be employed in an amount of 40% by mole to 60% by mole, 42% by mole to 58% by mole, 42% by mole to 56% by mole, 43% by mole to 56% by mole, 45% by mole to 56% by mole, 47% by mole to 56% by mole, or 48% by mole to 54% by mole, based on the total number of moles of the dicarboxylic acid component.

If the content of the aliphatic dicarboxylic acid is controlled to the above range, it is more advantageous for producing the effects of the present invention and to further enhance the impact resistance and durability of a biodegradable polyester sheet, film, or molded article such as a biodegradable polyester injection molded article prepared using the same.

In particular, since the aliphatic dicarboxylic acid component is composed of a linear chain, it may have an impact on the mechanical properties of the biodegradable polyester resin and blow moldability or injection moldability.

Specifically, if the content of the aliphatic dicarboxylic acid component is too large, the mechanical properties of the biodegradable polyester resin may be decreased, and the blow moldability and injection moldability of a biodegradable polyester sheet or film prepared from the biodegradable polyester resin may be deteriorated.

Nanocellulose may be further added at the time of the esterification reaction, for example, if the first and second esterification reactions are carried out, at the time of the first esterification reaction, the second esterification reaction, or both.

Specifically, in the case where the esterification reaction is carried out once, nanocellulose may be further added at the time of the esterification reaction, for example, at the time when an aliphatic dicarboxylic acid is, or a diol and an aliphatic dicarboxylic acid are, added.

In addition, in the case where the esterification reaction is carried out two or more times, nanocellulose may be added at the time of the first esterification reaction, the second esterification reaction, or both. For example, nanocellulose may be added at the time of the second esterification reaction, that is, at the time when an aliphatic dicarboxylic acid is, or a diol and an aliphatic dicarboxylic acid are, added, or at the initial stage of the esterification reaction. In such a case, the nanocellulose may be efficiently dispersed. In particular, it is preferable in terms of mechanical properties and thermal properties of the biodegradable polyester resin to add nanocellulose, and it is possible to enhance the strength, impact resistance, and durability of a biodegradable polyester sheet, film, or molded article as well.

Specific types of the nanocellulose are as described above.

In addition, the content of the nanocellulose may be, for example, 3,000 ppm or less, 2,500 ppm or less, 2,000 ppm or less, 1,800 ppm or less, 1,500 ppm or less, 1,000 ppm or less, 900 pm or less, 800 ppm or less, 700 pm or less, 600 ppm or less, 500 ppm or less, or 400 ppm or less, and 100 ppm or more, 150 ppm or more, 200 ppm or more, 250 ppm or more, or 300 ppm or more, based on the total weight of the diol, aromatic dicarboxylic acid, and aliphatic dicarboxylic acid. As the content of the nanocellulose satisfies the above range, biodegradability and mechanical properties such as strength can be further enhanced.

In the first step, the esterification reaction may be initiated after a titanium-based catalyst or a germanium-based catalyst is added.

Specifically, in the case where the esterification reaction is carried out once, a mixture containing a diol component, an aromatic dicarboxylic acid, and an aliphatic dicarboxylic acid may be prepared, and the esterification reaction may be carried out after the catalyst is added.

In addition, in the case where the esterification reaction is carried out two or more times, the esterification reaction may be initiated after the catalyst is added to the reactor before each of the esterification reactions. Specifically, once the slurry has been charged to a reactor and the catalyst has been added thereto, a first esterification reaction may be carried out, and/or once an aliphatic dicarboxylic acid or a diol component and an aliphatic dicarboxylic acid have been added to the reaction product obtained by carrying out a first esterification reaction of the slurry and the catalyst has been added thereto, a second esterification reaction may be carried out.

Specifically, the biodegradable polyester resin may comprise at least one selected from the group consisting of titanium isopropoxide, antimony trioxide, dibutyltin oxide, tetrapropyl titanate, tetrabutyl titanate, tetraisopropyl titanate, antimony acetate, calcium acetate, and magnesium acetate; or a germanium-based catalyst selected from the group consisting of germanium oxide, germanium methoxide, germanium ethoxide, tetramethyl germanium, tetraethyl germanium, and germanium sulfide.

In addition, the content of the catalyst may be 100 ppm to 1,000 ppm based on the total weight of the diol, aromatic dicarboxylic acid, and aliphatic dicarboxylic acid. For example, the biodegradable polyester resin may comprise a titanium-based catalyst or a germanium-based catalyst in an amount of 100 ppm to 800 ppm, 150 ppm to 700 ppm, 200 ppm to 600 ppm, or 250 ppm to 550 ppm. As the content of the catalyst satisfies the above range, the physical properties can be further enhanced.

A phosphorus-based stabilizer may be further added during the esterification reaction in the second step, at the end of the esterification reaction, or both.

Specifically, in the case where the esterification reaction is carried out once, a phosphorus-based stabilizer may be added during the esterification reaction, at the end of the esterification reaction, or both.

In addition, in the case where the esterification reaction is carried out two or more times, a phosphorus-based stabilizer may be added during the first esterification reaction, during the second esterification reaction, or both, or at the end of the first esterification reaction and at the end of the second esterification reaction.

Specifically, the biodegradable polyester resin may further comprise at least one phosphorus-based stabilizer selected from the group consisting of amine-based high-temperature thermal stabilizers such as tetraethylenepentaamine, phosphoric acid, phosphorous acid, polyphosphoric acid, trimethylphosphate, triethylphosphate, triethylphosphonoacetate, trimethylphosphine, and triphenylphosphine.

The content of the phosphorus-based stabilizer may be 3,000 ppm or less based on the total weight of the diol, aromatic dicarboxylic acid, and aliphatic dicarboxylic acid. Specifically, the content of the phosphorus-based stabilizer may be, for example, 10 ppm to 3,000 ppm, 20 ppm to 2,000 ppm, 20 ppm to 1,500 ppm, or 20 ppm to 1,000 ppm, based on the total weight of the diol, aromatic dicarboxylic acid, and aliphatic dicarboxylic acid. As the content of the phosphorus-based stabilizer satisfies the above range, it is possible to suppress the degradation of the polymer due to high temperatures during the reaction process, thereby reducing the end groups of the polymer and improving the color.

At least one selected from the group consisting of an additive such as silica, potassium, titanium dioxide, and magnesium and a color-correcting agent such as cobalt acetate may be further added at the end of the esterification reaction. That is, the additive and/or color-correcting agent may be added after the completion of the esterification reaction and then stabilized, and the polycondensation reaction may then be carried out.

The process for preparing a biodegradable polyester resin may comprise mixing the prepolymer and an inorganic filler to obtain a biodegradable and polymerizable polyester composition (second step).

That is, according to an embodiment of the present invention, an inorganic filler may be added after the completion of the esterification reaction in the first step.

For example, in the case where the esterification reaction is carried out once, an inorganic filler may be added after the completion of the esterification reaction. In the case where the esterification reaction is carried out two or more times, an inorganic filler may be added after the completion of the second esterification reaction. The amount and type of the inorganic filler are as described above.

In particular, if the inorganic filler is added after the completion of the esterification reaction, the dispersibility of the inorganic filler may be enhanced, thereby minimizing aggregation, filter clogging during processing may be minimized, and the difference between the initial filter pressure and the filter pressure after extrusion may be minimized. In addition, defects such as voids may be minimized during blow molding and extrusion stretching, and stable processing is possible to minimize problems such as bubble bursting or breakage, whereby excellent physical properties desired in the present invention can be achieved without defects.

If the inorganic filler is added before the esterification reaction or at the time of the esterification reaction, the viscosity may increase in the polycondensation step, thereby causing thermal decomposition or depolymerization, even if its dispersion is well performed in the esterification reaction step.

In addition, if the inorganic filler is added after the polycondensation reaction, or if the inorganic filler is compounded (blended) with a final biodegradable polyester resin, a large amount of the inorganic filler is required to achieve the above effect. Further, since the compatibility between a biodegradable polyester resin and an inorganic filler is poor, there may be a problem in that voids may be formed during blow molding and/or during extrusion stretching, which may cause bubbles to burst or break, resulting in reduced productivity, and may serve as internal and surface defects of the film.

In addition, according to an embodiment of the present invention, the inorganic filler may be a pretreated inorganic filler. If a pretreated inorganic filler is used, the inorganic filler particles are readily dispersed even in the polycondensation reaction step, so that the polymerization reaction proceeds smoothly. Filter clogging may be prevented, and voids may be minimized to increase processability, productivity, and moldability, thereby providing a biodegradable polyester sheet, film, or molded article of excellent quality.

Details on the pretreatment method of the inorganic filler are as described above.

In addition, the inorganic filler may be mixed with ultrapure water and at least one selected from the group consisting of diol components to prepare a slurry with a concentration of 10% by weight to 30% by weight and then pretreated according to the method described above, which is used in the form of a slurry (inorganic filler slurry).

According to an embodiment of the present invention, the inorganic filler may be added in a drop method. For example, the drop method is a method in which the inorganic filler or a slurry containing the inorganic filler is fed into a reactor at a drop rate of 10 kg/minute or less that allows the inorganic filler to fall directly into the reactants, so that the inorganic filler neither directly falls onto the agitator nor slides down the wall of the reactor.

The content of the inorganic filler is as described above.

The process for preparing a biodegradable polyester resin may comprise subjecting the biodegradable and polymerizable polyester composition to a polycondensation reaction at least once (third step).

The polycondensation reaction may be carried out at 180°C to 280°C and 1.0 Torr or lower for 1 hour to 5 hours. For example, the polycondensation reaction may be carried out at 190°C to 270°C, 210°C to 260°C, or 230°C to 255°C, at 0.9 Torr or lower, 0.7 Torr or lower, 0.2 Torr to 1.0 Torr, 0.3 Torr to 0.9 Torr, or 0.4 Torr to 0.6 Torr, for 1.5 hours to 10 hours, 2 hours to 8 hours, or 2.5 hours to 6 hours.

In addition, the polycondensation reaction may be carried out at least once.

Specifically, the biodegradable and polymerizable polyester composition is transferred to a pre-polycondensation step, and the pre-polycondensation may be carried out for 1 hour to 5 hours at 180°C to 280°C and a low vacuum of 100 to 300 Torr, which is then transferred to a final polycondensation step, and the final polycondensation may be carried out for 2 hours to 5 hours at 180°C to 280°C and 0.5 Torr or lower using, for example, a disc ring type reactor.

In addition, a titanium-based catalyst or a germanium-based catalyst may be further added to the prepolymer or the biodegradable and polymerizable polyester composition before the polycondensation reaction. In addition, one or more selected from the group consisting of an additive such as silica, potassium, and magnesium; a stabilizer such as trimethyl phosphate, triphenyl phosphate, trimethyl phosphine, phosphoric acid, phosphorous acid, and an amine-based stabilizer such as tetraethylenepentaamine; and a polymerization catalyst such as antimony trioxide, and tetrabutyl titanate may be further added to the prepolymer or the biodegradable and polymerizable polyester composition before the polycondensation reaction.

A polymer obtained by the polycondensation reaction may have a number average molecular weight of greater than 30,000 g/mole. For example, the number average molecular weight of the polymer may be 40,000 g/mole or more, 41,000 g/mole or more, 42,000 g/mole or more, or 43,000 g/mole or more. As the number average molecular weight of the polymer satisfies the above range, the physical properties and processability can be further enhanced.

Thereafter, pellets may be prepared from the polymer (fourth step).

Specifically, crystallization of the polymer may be induced at 100°C or lower, 70°C or lower, or 60°C or lower, and the polymer may then be cut to prepare polyester resin pellets.

The cutting step may be carried out using a pellet cutter without limitations as long as it is commonly used in the art, and the pellets may have various shapes. Examples of the pellet cutting method may include an underwater cutting method or a strand cutting method.

**Biodegradable polyester sheet**

Meanwhile, in an embodiment of the present invention, a biodegradable polyester sheet may be prepared using the biodegradable polyester resin.

Specifically, the biodegradable polyester sheet comprises the biodegradable polyester resin, wherein the content of metals in the biodegradable polyester resin may be 0.01% by weight to 7% by weight based on the total weight, and the dispersion index (DI) according to the above Equation 1 may be 3.0 or more.

The biodegradable polyester sheet may be prepared using the biodegradable polyester resin or biodegradable polyester resin pellets.

Specifically, the biodegradable polyester resin prepared above is put in, for example, a stainless steel (SUS) mold and maintained at about 150°C to 300°C under a pressure of 5 MPa to 20 MPa for 1 minute to 30 minutes using a hot press. It is then taken out and immediately cooled at 18°C to 25°C in water for about 10 seconds to 5 minutes to obtain a biodegradable polyester sheet.

The biodegradable polyester sheet may satisfy at least one characteristic selected from a centerline mean roughness (Ra) of 50 nm, a haze (Hz) of 50% or less, a static friction coefficient (FC) of 5 or less, and an oxygen permeability (OP) of 800 cc/m²·day·atm or less, and a tensile strength (TS) of 35 MPa or more.

The specific measurement methods and the specific ranges of each physical property are as described above.

**Biodegradable polyester film**

In an embodiment of the present invention, there is provided a biodegradable polyester film, which comprises the biodegradable polyester resin, wherein the content of metals in the biodegradable polyester resin may be 0.01% by weight to 7% by weight based on the total weight, and the dispersion index (DI) according to the following Equation 1 may be 3.0 or more.

The biodegradable polyester film may have a thickness of 5 $\mu$m to 200 $\mu$m. For example, the thickness of the biodegradable polyester film may be 5 $\mu$m to 180 $\mu$m, 5 $\mu$m to 160 $\mu$m, 10 $\mu$m to 150 $\mu$m, 15 $\mu$m to 130 $\mu$m, 20 $\mu$m to 100 $\mu$m, 25 $\mu$m to 80 $\mu$m, or 25 $\mu$m to 60 $\mu$m.

Meanwhile, the biodegradable polyester film may be prepared using the biodegradable polyester resin or biodegradable polyester resin pellets.

Specifically, the process for preparing a biodegradable polyester film may comprise a first step of subjecting a lactide monomer to a ring-opening polymerization or subjecting a diol component, an aromatic dicarboxylic acid component, and an aliphatic dicarboxylic acid component to an esterification reaction at least once to prepare a prepolymer; a second step of mixing the prepolymer and an inorganic filler to obtain a biodegradable and polymerizable polyester composition; a third step of subjecting the biodegradable and polymerizable polyester composition to a polycondensation reaction at least once; and a fourth step of preparing pellets from the polymer; and a fifth step of drying and melt-extruding the pellets.

Here, in the first step, the step of subjecting a diol component, an aromatic dicarboxylic acid component, and an aliphatic dicarboxylic acid component to an esterification reaction at least once may comprise mixing and pretreating a diol component and an aromatic dicarboxylic acid component to obtain a slurry; and subjecting a mixture comprising the slurry and an aliphatic dicarboxylic acid or a mixture of a reaction product obtained by esterification of the slurry and an aliphatic dicarboxylic acid to an esterification reaction at least once.

Details on the first step to the fourth step are as described above.

In the fifth step, the drying may be carried out at 60°C to 100°C for 2 hours to 12 hours. Specifically, the drying may be carried out at 65°C to 95°C, 70°C to 90°C, or 75°C to 85°C, for 3 hours to 12 hours or 4 hours to 10 hours. As the drying process conditions of the pellets satisfy the above ranges, it is possible to further enhance the quality of a biodegradable polyester film or molded article thus produced.

In the fifth step, the melt-extrusion may be carried out at a temperature of 270°C or lower. For example, the melt-extrusion may be carried out at a temperature of 265°C or lower, 260°C or lower, 255°C or lower, 150°C to 270°C, 150°C to 255°C, or 150°C to 240°C. The melt-extrusion may be carried out by a blown film process.

**Mode for the Invention**

Hereinafter, the present invention will be described in more detail with reference to the following examples. But the following Examples are intended to illustrate the present invention, and the scope of the Examples is not limited thereto only.

**[Example]**

**Example 1**

**Preparation of a biodegradable polyester resin**

**Step 1: Preparation of a prepolymer**

A reactor was charged with L-lactide (Total Corbion, L-lactide 100%), and 400 ppm of tin octoate as a catalyst was added thereto. A ring-opening polymerization was then carried out at about 240°C for about 2 hours to obtain a prepolymer.

**Step 2: Preparation of a biodegradable and polymerizable polyester composition**

50 ppm of a thermal stabilizer and 1% by weight of $TiO_2$ (manufacturer: Omiya) as an inorganic filler were added to the prepolymer obtained in the first step to obtain a biodegradable and polymerizable polyester composition based on the total weight of the biodegradable and polymerizable polyester composition.

Here, the inorganic filler was an inorganic filler pretreated with a mixer tank and had a D50 of 1.5 $\mu$m and a

specific surface area of 50 m$^2$/g. The pretreatment was carried out by agitating the inorganic filler at room temperature at a speed of about 300 rpm for about 1 hour using a slurry tank having a dust explosion-proof facility specification. In addition, upon completion of the esterification (ES) reaction, the inorganic filler was fed to the esterification reactor and stabilized for 10 minutes.

**Step 3: Polycondensation reaction**

The biodegradable and polymerizable polyester composition obtained in the second step was continuously transferred to a pre-polycondensation step and reacted at about 240°C under a low vacuum of about 100 Torr for about 2 hours.

Thereafter, it was transferred to a final polycondensation step and subjected to a final polycondensation reaction for about 3 hours under 0.5 Torr in a disc ring-type reactor. Thereafter, a polymer having a number average molecular weight of about 60,000 g/mole was prepared by increasing the molecular weight to a high viscosity for about 3 hours while removing the residual 1,4-butanediol and by-products. The viscosity immediately after the polymerization was 7,200 poise.

**Step 4: Preparation of pellets**

The polymer obtained in the third step was induced to be crystallized at 50°C in an underwater cutter (UWC) and then cut with a pellet cutter to obtain biodegradable polyester resin pellets.

**Preparation of a biodegradable polyester sheet**

Two Teflon sheets were prepared. A stainless steel (SUS) frame (area of 12 cm × 12 cm) was placed on one Teflon sheet, and about 7 g of the polyester resin pellets prepared above was put in the stainless steel (SUS) frame (area of 12 cm × 12 cm), which was covered with another Teflon sheet. It was placed in the center of a hot press (manufacturer: WithLab, model name: WL 1600SA) having an area of about 25 cm × 25 cm. It was maintained at about 240°C under a pressure of about 10 MPa for about 3 minutes and then taken out. It was immediately cooled in water at about 20°C for about 30 seconds, thereby preparing a biodegradable polyester sheet having an area of about 10 cm × 10 cm and a thickness of about 300 μm.

**Preparation of a biodegradable polyester film**

The biodegradable polyester resin pellets were dried at 80°C for 5 hours and then melt-extruded at 240°C using a blown film extruder (Blown Film Extrusion Line, manufacturer: Eugene Engineering) to prepare a biodegradable polyester film having a thickness of 50 μm.

**Example 2**

**Preparation of a biodegradable polyester resin**

**Step 1: Preparation of a prepolymer**

Terephthalic acid (TPA) and adipic acid (AA) were used at 48% by mole and 52% by mole, respectively.

1,4-Butanediol (1,4-BDO) and terephthalic acid (TPA) were mixed at a ratio (glycol/acid (G/A) of 1.5, which was then charged to a slurry tank (provided with an anchor type at the bottom and two flat-type agitators at the top) in a state without a catalyst. Here, terephthalic acid (TPA) had a D50 of 200 μm and a standard deviation (SD) of the D50 of 20%.

Then, the mixture was agitated at 70°C and 150 rpm for 30 minutes, thereby obtaining a slurry without phase separation. The slurry was fed to a reactor through a supply line, and 500 ppm of tetrabutyl titanate (Tyzor TnBT, Dupont) as a titanium-based catalyst was added thereto. A first esterification reaction was then carried out at 210°C and atmospheric pressure for about 1.5 hours until 95% of water as a by-product was discharged.

Added to the reaction product of the first esterification reaction were 52% by mole of 1,4-butanediol (1,4-BDO) based on the total number of moles of the diol component, 52% by mole of adipic acid (AA) (G/A of 1.1) based on the total number of moles of the dicarboxylic acid components, and 200 ppm of tetrabutyl titanate (Tyzor TnBT, Dupont) as a titanium-based catalyst based on the total weight of the diol, aromatic dicarboxylic acid, and aliphatic dicarboxylic acid. A second esterification reaction was then carried out at 210°C and atmospheric pressure for about 2 hours until 95% of water as a by-product was discharged, thereby obtaining a prepolymer having a number average molecular weight of 45,000 g/mole.

**Step 2: Preparation of a biodegradable and polymerizable polyester composition**

100 ppm of triethyl phosphate as a thermal stabilizer, 5% by weight of $SiO_2$ (from Sicily) as an inorganic filler, 100 ppm of siloxane polyol (Chisso Corporation) as a dispersant, and 900 ppm of cellulose nanocrystals (CNC) (particle diameter of 190 nm) treated for 15 minutes at 2,000 rpm with an agitator, based on the total weight of the diol, aromatic dicarboxylic acid, and aliphatic dicarboxylic acid, were further added to the prepolymer obtained in the first step to prepare a biodegradable and polymerizable polyester composition.
Here, the inorganic filler was an inorganic filler pretreated in the same manner as in Example 1 and had a D50 of 2.8 $\mu$m and a specific surface area of 250 $m^2$/g.

**Step 3: Polycondensation reaction**

The biodegradable and polymerizable polyester composition obtained in the second step was continuously transferred to a pre-polycondensation step and reacted at 240°C under a low vacuum of about 200 Torr for about 3 hours.
Thereafter, it was transferred to a final polycondensation step and subjected to a polycondensation reaction for about 3 hours under about 0.5 Torr in a disc ring-type reactor. Thereafter, a polymer having a number average molecular weight of about 60,000 g/mole was prepared by increasing the molecular weight to a high viscosity for about 3 hours while removing the residual 1,4-butanediol and by-products. The viscosity immediately after the polymerization was 9,800 poise.

**Step 4: Preparation of pellets**

The polymer obtained in the third step was induced to be crystallized at 50°C in an underwater cutter (UWC) and then cut with a pellet cutter to obtain biodegradable polyester resin pellets.

**Preparation of a biodegradable polyester sheet and film**

A biodegradable polyester sheet and a film were each prepared in the same manner as in Example 1.

**Example 3**

A biodegradable polyester resin, a biodegradable polyester sheet, and a biodegradable polyester film were each prepared in the same manner as in Example 2, except that $CaCO_3$ was used as an inorganic filler, its D50 and specific surface area were changed, its feeding amount was changed, and CNC was not fed, as shown in Table 1 below.

**Example 4**

A biodegradable polyester resin, a biodegradable polyester sheet, and a biodegradable polyester film were each prepared in the same manner as in Example 2, except that the D50 and specific surface area of the inorganic filler were changed, and its feeding amount was changed, as shown in Table 1 below.

**Example 5**

A biodegradable polyester resin, a biodegradable polyester sheet, and a biodegradable polyester film were each prepared in the same manner as in Example 2, except that $TiO_2$ was used as an inorganic filler, its D50 and specific surface area were changed, its feeding amount was changed, and CNC was not fed, as shown in Table 1 below.

**Comparative Example 1**

A biodegradable polyester resin, a biodegradable polyester sheet, and a biodegradable polyester film were each prepared in the same manner as in Example 5, except that $TiO_2$ as an inorganic filler was not added upon completion of the esterification reaction, rather it was mixed (compounded) with the polymer obtained by the polycondensation, as shown in Table 1 below.

**Comparative Example 2**

A biodegradable polyester resin, a biodegradable polyester sheet, and a biodegradable polyester film were each prepared in the same manner as in Example 5, except that an inorganic filler was not used, as shown in Table 1 below.

**Comparative Example 3**

A biodegradable polyester resin, a biodegradable polyester sheet, and a biodegradable polyester film were each prepared in the same manner as in Example 2, except that the D50 and specific surface area of $SiO_2$ as an inorganic filler were changed, and its feeding amount was changed, and CNC was not fed, as shown in Table 1 below.

**[Evaluation Example]**

The biodegradable polyester resin, a biodegradable polyester sheet, and a biodegradable polyester film prepared in the Examples and Comparative Examples were each tested for measuring and evaluating their properties. The results are shown in Tables 1 and 2 below.

**Evaluation Example 1: Filter pressure**

In a blown film extruder (Blown Film Extrusion Line, manufacturer: Eugene Engineering), a single-screw was used, and a 40-$\mu$m mat filter (LIANDA) was installed at the rear end of the gear pump in the extruder, and then the biodegradable polyester was extruded at about 240°C. The initial filter pressure ($FP_0$) applied to the filter and the filter pressure ($FP_2$) applied to the filter after extrusion for 2 hours were measured, respectively.

In addition, the filter pressure difference ($\Delta FP$) between the initial filter pressure ($FP_0$) and the filter pressure after 2 hours of extrusion ($FP_2$) according to the following Equation 3 was calculated.

$$[\text{Equation 3}]$$

$$\Delta FP = \left| FP_0 - FP_2 \right|$$

In Equation 3, $FP_0$ is the initial pressure ($kg/cm^2$) applied to the filter when the biodegradable polyester resin is extruded at 240°C, and $FP_2$ is the pressure ($kg/cm^2$) applied to the filter when the biodegradable polyester resin is extruded at 240°C for 2 hours.

**Evaluation Example 2: Content of metals and inorganic substances in the resin**

The content of metals and inorganic substances in the biodegradable polyester resins obtained in the Examples and Comparative Examples was measured using a thermogravimetric analyzer (TGA, TA Instruments) and inductively coupled plasma emission spectrometry (ICP/OES, Thermo Scientific).

Specifically, the temperature was raised from room temperature to 800°C in a thermogravimetric analyzer to burn organic substances, and the content of residual inorganic substances (ash) was measured.

In addition, the amount of specific metal elements in the sample was quantitatively measured in the unit of ppm using an inductively coupled plasma emission spectrometry.

**Evaluation Example 3: Particle size and specific surface area**

The average particle size (D50) and standard deviation (SD) of terephthalic acid (TPA) and inorganic additives were measured in a particle size distribution (PSD) by a particle size analyzer Microtrac S3500 (Microtrac Inc.) in a measurement range of 0.02 $\mu$m to 2,000 $\mu$m under the following conditions.

- Measurement environment: temperature of 10°C to 35°C, humidity of 90% RH, non-condensing maximum
- D50 as an average particle size distribution for each section and SD were measured.

The standard deviation refers to the square root of variance and may be calculated using a software.

Meanwhile, the specific surface area of the inorganic additives was measured using a BET specific surface area analyzer (Brunauer Emmett Teller, model name ASAP 2020 (Micromeritics)).

**Evaluation Example 4: Viscosity**

The viscosity (poise) was measured, immediately after the polymerization for a resin, as dynamic viscosity using a dynamic viscometer, RDS (Rheometrics Dynamic Spectrometer, TA manufacturer: Instrument, Discovery HR 30) while the angular velocity per second (1 rad/sec) was increased at a temperature of 240°C (1 rad/sec being 9.5 rpm).

**Evaluation Example 5: Surface roughness (Ra)**

The surface roughness was measured with AFM equipment (manufacturer: Park System, equipment name: XE-150).
Specifically, the centerline mean roughness (Ra) was obtained by cutting a sheet to a length of 3 cm and a width of 3 cm according to JIS B0601 to prepare a specimen and then measuring the two-dimensional surface roughness at 5 or more points on the surface of the specimen using the surface roughness meter.
The centerline mean roughness (Ra) is an arithmetic average roughness of the deviation of the roughness curve from the average line according to JIS 0161. The sum of the upper and lower sides of the centerline in the reference length is obtained, which is divided by the length of the measured section.

**Evaluation Example 6: Haze**

The haze was evaluated using a haze measuring instrument (Haze-Gardner, Gardner BYK, Germany). Specifically, the haze (%) was measured according to the following Equation 4 using a haze meter for a specimen prepared by cutting a sheet to a length of 5 cm, a width of 5 cm, and a thickness of 25 $\mu$m according to ASTM D1003.

$$[\text{Equation 4}]$$

$$\text{Haze (\%)} = (\text{total scattered light/total transmitted light}) \times 100\%$$

**Evaluation Example 7: Static friction coefficient**

Biodegradable polyester sheet specimens of the Examples or Comparative Examples were each measured for the static friction coefficient using a friction coefficient tester (QM110CF) of Qmesys.
The static friction coefficient was measured as one surface of a specimen of a biodegradable polyester sheet of the Examples or Comparative Examples was brought into contact with stainless steel (SUS) and then slid according to ASTM D1894.

**Evaluation Example 8: Oxygen permeability**

Biodegradable polyester sheet specimens of the Examples or Comparative Examples were each measured for the oxygen permeability using OX-TRAN 702 of Mocon.
Specifically, the oxygen permeability was measured at a temperature of 25°C and a relative humidity (R.H.) of 0%, and the measurement sample size was 50 cm$^2$ according to ASTM D3985. The final unit of the oxygen permeability is represented by cc/m$^2$·day atm. The higher the oxygen permeability value, the poorer the oxygen barrier properties.

**Evaluation Example 9: Tensile strength (TS)**

The biodegradable polyester sheets prepared in the Examples or Comparative Examples were each cut to prepare a specimen in accordance with ASTM D638 V-type. The tensile strength (kgf/mm$^2$ = 9.8 MPa) and elongation at break (%) were measured using INSTRON's universal testing machine (UTM, model name 4206-001) at a tensile speed of 100 mm/minute and calculated by the program built in the equipment.

**Evaluation Example 10: Dispersion index (DI)**

The dispersion index (DI) was calculated according to the following Equation 1 using the values of oxygen permeability (OP) and tensile strength (TS) measured in Evaluation Examples 8 and 9.

[Equation 1]

$$Dispersion\ index\ (DI) = \frac{TS}{OP} \times 100$$

In Equation 1, TS and OP are values, exclusive of units, measured for a specimen of a biodegradable polyester sheet prepared from the biodegradable polyester resin.

TS is the tensile strength (MPa) measured at a tensile speed of 100 mm/minute using a universal testing machine for a specimen prepared according to an ASTM D638 V type, and OP is the oxygen permeability (cc/m2·day·atm) measured at a temperature of 25°C and a relative humidity (RH) of 0% using OX-TRAN 702 for a specimen made to have a thickness of 500 $\mu$m in accordance with ASTM D3985.

**Evaluation Example 11: Processability reduction index (PRI)**

The processability reduction index (PRI) was calculated according to the following Equation 2 using the values of centerline mean roughness (Ra) and haze (Hz) measured in Evaluation Examples 5 and 6.

[Equation 2]

Processability reduction index (PRI) = Ra + Hz

In Equation 2, Ra and Hz are values, exclusive of units, measured for a specimen of a biodegradable polyester sheet prepared from the biodegradable polyester resin.

Ra is the centerline mean roughness (Ra) (nm) calculated by cutting a sheet to a length of 3 cm and a width of 3 cm according to JIS B0601 to prepare a specimen and then measuring the two-dimensional surface roughness at 5 or more points on the surface of the specimen using a surface roughness meter.

Hz is the haze (%) measured using a haze meter for a specimen prepared by cutting a sheet to a length of 5 cm, a width of 5 cm, and a thickness of 25 $\mu$m according to ASTM D1003.

[Table 1]

| | | Ex. 1 | Ex. 2 | Ex. 3 | Ex. 4 | Ex. 5 | C. Ex. 1 | C. Ex. 2 | C. Ex. 3 |
|---|---|---|---|---|---|---|---|---|---|
| Raw materials | Components of the composition | PLA/TiO$_2$ | PBAT/CNC /SiO$_2$ | PBAT/ CaCO$_3$ | PBAT/CNC /SiO$_2$ | PBAT/TiO$_2$ | PBAT/TiO$_2$ | PBAT | PBAT/SiO$_2$ |
| | Step of adding the inorganic filler | Upon completion of the esterification (ES) reaction | | | | | Compounded after polycondensation | Upon completion of the esterification (ES) reaction | |
| | D50 ($\mu$m) of the inorganic filler | 1.5 | 2.8 | 0.8 | 15 | 0.5 | 1.5 | - | 2 |
| | Specific surface area of the inorganic filler (m$^2$/g) | 50 | 250 | 200 | 800 | 100 | 50 | - | 150 |
| | Feeding amount of inorganic filler (% by wt.) | 1 | 5 | 3 | 3 | 10 | 3 | - | 12 |
| Process effects | Initial filter pressure (FP0) (kg/cm$^2$) with a mat filter of 40 $\mu$m | 60 | 135 | 104 | 129 | 134 | 150 | 31 | 158 |
| | Filter pressure after 2-hr extrusion (FP$_2$) (kg/cm$^2$) | 68 | 153 | 119 | 158 | 183 | 254 | 39 | Filter burst |
| | Filter pressure difference ($\Delta$FP) (kg/cm$^2$) | 8 | 18 | 15 | 29 | 49 | 104 | 8 | - |

[Table 2]

| | | Ex. 1 | Ex. 2 | Ex. 3 | Ex. 4 | Ex. 5 | C. Ex. 1 | C. Ex. 2 | C. Ex. 3 |
|---|---|---|---|---|---|---|---|---|---|
| Resin | Content of metals in the resin (% by wt.) | 0.62 | 2.37 | 1.25 | 1.46 | 6.03 | 1.84 | 0.005 | 5.62 |
| | Content of inorganic substances in the resin (% by wt.) | 0.6 | 2.3 | 1.2 | 1.4 | 6.0 | 1.8 | 0.0 | 5.6 |
| | Content of CNC (ppm) | - | 900 | - | 900 | - | - | - | - |
| | Content of the dispersant (ppm) | | Siloxane polyol 100 | | | | | | |
| | Resin viscosity (poise) | 7,200 | 9,800 | 8,900 | 8,800 | 11,000 | 6,900 | 3,800 | 4,300 |
| Sheet | Ra (nm) | 16 | 39 | 31 | 36 | 46 | 159 | 9 | 204 |
| | Haze (Hz, %) | 25 | 39 | 29 | 35 | 53 | 60 | 20 | 67 |
| | Static friction coefficient | 3.1 | 1.8 | 2.1 | 1.9 | 0.3 | 1.5 | 9.8 | 0.9 |
| | Oxygen permeability (cc/m$^2$·day·atm) | 770 | 560 | 640 | 600 | 390 | 950 | 1,020 | 910 |
| | Tensile strength (TS, MPa) | 36 | 43 | 39 | 41 | 36 | 28 | 19 | 20 |
| | DI (Eq. 1) | 4.68 | 7.68 | 6.09 | 6.83 | 9.23 | 2.95 | 1.86 | 2.20 |
| | PRI (Eq. 2) | 41.00 | 78.00 | 60.00 | 71.00 | 99.00 | 219.00 | 29.00 | 271.00 |

[Equation 1] Dispersion index = (TS/OP) × 100

[Equation 2] Processability reduction index (PRI) = Ra + Hz

As can be seen from Tables 1 and 2, when a biodegradable and polymerizable polyester composition containing 0.1% by weight to 10% by weight of an inorganic filler was subjected to a polycondensation reaction, the dispersibility during the polycondensation was excellent, whereby it was possible to control the viscosity of a biodegradable polyester resin prepared from the biodegradable composition, as well as the content of metals in the resin and the dispersion index (DI), to optimal ranges. In addition, the processability reduction index (PRI) and the filter pressure difference ($\Delta$FP) of the biodegradable polyester resin could be controlled within specific ranges, so that the surface roughness, haze, static friction coefficient, oxygen permeability, and tensile strength of a biodegradable polyester sheet prepared therefrom could be overall improved.

Specifically, when the biodegradable and polymerizable polyester compositions of Examples 1 to 5 were each subjected to a polycondensation reaction, the dispersibility was excellent, whereby the difference between the initial filter pressure and the filter pressure after 2 hours of extrusion ($\Delta$FP) was very low of 49 kg/cm$^2$ or lower as compared with the biodegradable and polymerizable polyester compositions of Comparative Examples 1 to 3. The viscosity of a biodegradable polyester resin obtained therefrom was 7,200 poise to 11,000 poise, and the dispersion index (DI) was 4.68 or more, whereby the content of metals in the biodegradable polyester resin could be achieved in an appropriate range of 0.62 to 6.03. Since the formation of voids in the processing was reduced, it was possible to achieve a low oxygen permeability of 770 cc/m$^2$.dayatm or less while achieving an excellent tensile strength of 36 MPa to 43 MPa.

In addition, the biodegradable polyester sheets obtained from the biodegradable and polymerizable polyester compositions each had a haze of 53% or less, a centerline mean roughness (Ra) of 46 nm or less, a low static friction coefficient of 3.1 or less, and a processability reduction index (PRI) of 99 or less; thus, it was possible to achieve the optimal physical properties that can enhance dispersibility and processability.

In contrast, when a biodegradable and polymerizable polyester composition containing no inorganic additives in Comparative Example 2 was used, the biodegradable polyester sheet prepared therefrom had a very high static friction coefficient of 9.8 and an oxygen permeability of 830 cc/m$^2$·day·atm, which was significantly increased as compared with the biodegradable polyester sheets of Examples 1 to 5.

In addition, for the biodegradable polyester resin containing an excessive amount of an inorganic additive in Comparative Example 3, the dispersion index (DI) was very low at 2.20, and the processability reduction index (PRI) was very high at 271, indicating that the dispersibility and processability were deteriorated. Furthermore, the filter pressure continued to rise during processing, resulting in the filter bursting.

Meanwhile, it was confirmed that the addition of an inorganic filler had a significant impact on the physical properties of the biodegradable polyester resin, sheet, or film.

Specifically, when an inorganic additive was compounded with the biodegradable polyester resin obtained after the polycondensation in Comparative Example 1, the difference between the initial filter pressure and the filter pressure after 2 hours of extrusion ($\Delta$FP) was 104 kg/cm$^2$ due to poor dispersibility, which was significantly increased as compared with the Examples in which an inorganic additive was added after the completion of the esterification (ES) reaction and prior to the polycondensation reaction. The viscosity of the biodegradable polyester resin was steeply lowered to 7,000 poise or less, the haze and oxygen permeability were significantly increased, and the tensile strength was also decreased; thus, it was not possible to achieve physical properties suitable for packaging materials.

In addition, it was confirmed that the dispersibility and processability varied with the D50 and specific surface area of the inorganic filler, and the addition of nanocellulose; thus, the physical properties of the biodegradable polyester resin or the biodegradable polyester sheet or film prepared from the same can vary accordingly.

**Claims**

1. A biodegradable and polymerizable polyester composition, which comprises an aliphatic polymerizable polyester composition or an aliphatic-aromatic polymerizable polyester composition; and an inorganic filler,

   wherein the aliphatic polymerizable polyester composition is at least one selected from the group consisting of a lactide monomer and a prepolymer obtained by ring-opening thereof,
   the aliphatic-aromatic polymerizable polyester composition is at least one selected from the group consisting of a monomer composition comprising a diol component and a dicarboxylic acid component and a prepolymer of part or all of the monomer composition,
   the inorganic filler is employed in an amount of 0.1% by weight to 10% by weight based on the total weight of the biodegradable and polymerizable polyester composition, and
   the biodegradable and polymerizable polyester composition has a viscosity of 5,000 to 15,000 poise at 240°C.

2. The biodegradable and polymerizable polyester composition of claim 1, wherein the inorganic filler comprises at least one selected from the group consisting of SiO$_2$, CaCO$_3$, TiO$_2$, BaSO$_4$, and Al$_2$O$_3$.

3. The biodegradable and polymerizable polyester composition of claim 1 or 2, wherein the inorganic filler has a specific surface area (Brunauer-Emmett-Teller; BET) of 1,000 m$^2$/g or less and an average particle diameter (D50) of 15 μm or less.

4. The biodegradable and polymerizable polyester composition of claim 1, 2 or 3, wherein the inorganic filler is an inorganic filler pretreated by at least one method selected from pretreatment with ultrasonic treatment, a mixer tank, a high-pressure homogenizer, and a dispersant.

5. A biodegradable polyester resin, which is prepared from the biodegradable and polymerizable polyester composition of claim 1,

wherein the content of metals in the biodegradable polyester resin is 0.01% by weight to 7% by weight based on the total weight, and
the dispersion index (DI) according to the following Equation 1 is 3.0 or more:

[Equation 1]

$$Dispersion\ index\ (DI) = \frac{TS}{OP} \times 100$$

in Equation 1, TS and OP are values, exclusive of units, measured for a specimen of a biodegradable polyester sheet prepared from the biodegradable polyester resin,
TS is the tensile strength (MPa) measured at a tensile speed of 100 mm/minute using a universal testing machine for a specimen prepared according to an ASTM D638 V type, and
OP is the oxygen permeability (cc/m$^2$·day·atm) measured at a temperature of 25°C and a relative humidity (RH) of 0% using OX-TRAN 702 for a specimen made to have a thickness of 500 μm in accordance with ASTM D3985.

6. The biodegradable polyester resin of claim 5, which has a processability reduction index (PRI) of 100 or less according to the following Equation 2:

[Equation 2]

Processability reduction index (PRI) = Ra + Hz

in Equation 2, Ra and Hz are values, exclusive of units, measured for a specimen of a biodegradable polyester sheet prepared from the biodegradable polyester resin,
Ra is the centerline mean roughness (Ra) (nm) calculated by cutting a sheet to a length of 3 cm and a width of 3 cm according to JIS B0601 to prepare a specimen and then measuring the two-dimensional surface roughness at 5 or more points on the surface of the specimen using a surface roughness meter, and
Hz is the haze (%) measured using a haze meter for a specimen prepared by cutting a sheet to a length of 5 cm, a width of 5 cm, and a thickness of 25 μm according to ASTM D1003.

7. The biodegradable polyester resin of claim 5 or 6, wherein the biodegradable polyester resin has an intrinsic viscosity of 5,000 poise or more, and
a biodegradable polyester sheet prepared from the biodegradable polyester resin satisfies at least one characteristic selected from the following:

a centerline mean roughness (Ra) of 50 nm or less;
a haze (Hz) of 50% or less;
a static friction coefficient (FC) of 5 or less;
an oxygen permeability (OP) of 800 cc/m$^2$·day·atm or less; and
a tensile strength (TS) of 35 MPa or more.

8. The biodegradable polyester resin of claim 5, 6 or 7, wherein the biodegradable polyester resin comprises an aliphatic polyester resin or an aliphatic-aromatic polyester resin,

the aliphatic polyester resin comprises polylactic acid (PLA), and

the aliphatic-aromatic polyester resin comprises a first repeat unit comprising a first diol residue and an aromatic dicarboxylic acid residue and a second repeat unit comprising a second diol residue and an aliphatic dicarboxylic acid residue.

**9.** The biodegradable polyester resin of any of claims 5 to 8, wherein the biodegradable polyester resin further comprises nanocellulose having an average particle size of 100 nm or more.

**10.** The biodegradable polyester resin of any of claims 5 to 9, wherein when the biodegradable polyester resin is measured for the filter pressure in an extruder equipped with a single screw and a 40-$\mu$m mat filter, the filter pressure difference ($\Delta$FP) according to the following Equation 3 is 100 kg/cm$^2$ or less:

[Equation 3]

$$\Delta FP = \left| FP_0 - FP_2 \right|$$

in Equation 3, $FP_0$ is the initial pressure (kg/cm$^2$) applied to the filter when the biodegradable polyester resin is extruded at 240°C, and $FP_2$ is the pressure (kg/cm$^2$) applied to the filter when the biodegradable polyester resin is extruded at 240°C for 2 hours.

**11.** A process for preparing a biodegradable polyester resin, which comprises:

subjecting the biodegradable and polymerizable polyester composition of claim 1 to a polycondensation reaction at least once,

wherein the content of metals in the biodegradable polyester resin is 0.01% by weight to 7% by weight based on the total weight, and

the dispersion index (DI) according to the following Equation 1 is 3.0 or more:

[Equation 1]

$$Dispersion\ index\ (DI) = \frac{TS}{OP} \times 100$$

in Equation 1, TS and OP are values, exclusive of units, measured for a specimen of a biodegradable polyester sheet prepared from the biodegradable polyester resin,

TS is the tensile strength (MPa) measured at a tensile speed of 100 mm/minute using a universal testing machine for a specimen prepared according to an ASTM D638 V type, and

OP is the oxygen permeability (cc/m$^2$·day·atm) measured at a temperature of 25°C and a relative humidity (RH) of 0% using OX-TRAN 702 for a specimen made to have a thickness of 500 $\mu$m in accordance with ASTM D3985.

**12.** The process for preparing a biodegradable polyester resin of claim 11, wherein the biodegradable and polymerizable polyester composition is obtained by:

subjecting a lactide monomer to a ring-opening polymerization or subjecting a diol component, an aromatic dicarboxylic acid component, and an aliphatic dicarboxylic acid component to an esterification reaction at least once to prepare a prepolymer; and

mixing the prepolymer and an inorganic filler.

**13.** A biodegradable polyester film, which comprises a biodegradable polyester resin,

wherein the biodegradable polyester resin is prepared from the biodegradable and polymerizable polyester composition of claim 1,

the content of metals in the biodegradable polyester resin is 0.01% by weight to 7% by weight based on the total weight, and

the dispersion index (DI) according to the following Equation 1 is 3.0 or more:

[Equation 1]

$$Dispersion\ index\ (DI) = \frac{TS}{OP} \times 100$$

in Equation 1, TS and OP are values, exclusive of units, measured for a specimen of a biodegradable polyester sheet prepared from the biodegradable polyester resin,

TS is the tensile strength (MPa) measured at a tensile speed of 100 mm/minute using a universal testing machine for a specimen prepared according to an ASTM D638 V type, and

OP is the oxygen permeability (cc/m$^2$·day·atm) measured at a temperature of 25°C and a relative humidity (RH) of 0% using OX-TRAN 702 for a specimen made to have a thickness of 500 $\mu$m in accordance with ASTM D3985.

Europäisches
Patentamt

European
Patent Office

Office européen
des brevets

## EUROPEAN SEARCH REPORT

**Application Number**

EP 23 17 4189

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 305 304 B (XINJIANG GENERAL PLASTIC HIGH PERFORMANCE ENGINEERING TECH RESEARCH CE) 25 June 2021 (2021-06-25) | 1-8, 10-13 | INV. C08K3/22 C08K3/26 |
| A | * example 7 * | 9 | C08K3/30 C08K3/36 |
| A | WO 2013/038770 A1 (TORAY INDUSTRIES [JP]; HIROTA MASAYUKI; YAMAMURA GOUHEI; SAKAMOTO JUN) 21 March 2013 (2013-03-21) * examples 1-10; tables 1, 2 * | 1-13 | C08L67/02 C08L67/04 C08J5/18 |
| A | EP 2 583 994 A1 (TORAY INDUSTRIES [JP]) 24 April 2013 (2013-04-24) * examples 1-10, 12; table 1 * | 1-13 | ADD. C08G63/183 C08G63/08 C08G63/88 C08G63/78 |

**TECHNICAL FIELDS SEARCHED (IPC)**

C08K
C08G
C08J

The present search report has been drawn up for all claims

| Place of search | Date of completion of the search | Examiner |
|---|---|---|
| The Hague | 12 October 2023 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 4189

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2023

| Patent document cited in search report | | Publication date | Patent family member(s) | | Publication date |
|---|---|---|---|---|---|
| CN 110305304 | B | 25-06-2021 | NONE | | |
| WO 2013038770 | A1 | 21-03-2013 | CN | 103814066 A | 21-05-2014 |
| | | | JP WO2013038770 A1 | | 23-03-2015 |
| | | | KR 20140059778 A | | 16-05-2014 |
| | | | WO 2013038770 A1 | | 21-03-2013 |
| EP 2583994 | A1 | 24-04-2013 | CN | 102892817 A | 23-01-2013 |
| | | | EP | 2583994 A1 | 24-04-2013 |
| | | | JP | 5867084 B2 | 24-02-2016 |
| | | | JP WO2011162046 A1 | | 19-08-2013 |
| | | | KR 20130089159 A | | 09-08-2013 |
| | | | WO 2011162046 A1 | | 29-12-2011 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003160202 A